(19) Europäisches Patentamt
European Patent Office
Office européen des brevets

(11) **EP 4 664 492 A1**

(12) **EUROPEAN PATENT APPLICATION**
published in accordance with Art. 153(4) EPC

(43) Date of publication:
**17.12.2025 Bulletin 2025/51**

(21) Application number: **23921038.8**

(22) Date of filing: **07.02.2023**

(51) International Patent Classification (IPC):
*H01B 1/06* (2006.01)          *C01B 25/14* (2006.01)
*H01B 13/00* (2006.01)          *H01M 10/052* (2010.01)
*H01M 10/0562* (2010.01)

(52) Cooperative Patent Classification (CPC):
**C01B 25/14; H01B 1/06; H01B 13/00;**
**H01M 10/052; H01M 10/0562;** Y02E 60/10

(86) International application number:
**PCT/JP2023/003980**

(87) International publication number:
**WO 2024/166204 (15.08.2024 Gazette 2024/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Furukawa Co., Ltd.**
**Chiyoda-ku**
**Tokyo 100-8370 (JP)**

(72) Inventor: **YOSHIDA, Tatsushi**
**Tsukuba-shi, Ibaraki 305-0856 (JP)**

(74) Representative: **Müller, Christian Stefan Gerd**
**ZSP Patentanwälte PartG mbB**
**Hansastraße 32**
**80686 München (DE)**

(54) **DIPHOSPHORUS PENTASULFIDE COMPOSITION, STARTING MATERIAL COMPOSITION FOR SULFIDE-BASED INORGANIC SOLID ELECTROLYTE MATERIALS, SULFIDE-BASED INORGANIC SOLID ELECTROLYTE MATERIAL, METHOD FOR PRODUCING SULFIDE-BASED INORGANIC SOLID ELECTROLYTE MATERIAL, SOLID ELECTROLYTE, SOLID ELECTROLYTE MEMBRANE, ALL-SOLID-STATE LITHIUM ION BATTERY AND METHOD FOR PRODUCING DIPHOSPHORUS PENTASULFIDE COMPOSITION**

(57)      There is provided a diphosphorus pentasulfide composition according to the present embodiment, in which a degree of crystallinity calculated from a spectrum obtained by X-ray diffraction using a CuKa ray as a ray source is equal to or more than 40% and equal to or less than 80%, in a DSC curve of the diphosphorus pentasulfide composition obtained by measurement using a differential scanning calorimeter under conditions of a start temperature of 25°C, a measurement temperature range of equal to or more than 30°C and equal to or less than 350°C, a temperature rising rate of 5°C/min, and an argon atmosphere of 100 ml/min, an endothermic peak is observed in a temperature range of equal to or more than 280°C and equal to or less than 300°C, and a heat of fusion of the endothermic peak is equal to or more than 60 J/g and equal to or less than 100 J/g.

FIG. 2

**Description**

TECHNICAL FIELD

The present invention relates to a diphosphorus pentasulfide composition, a starting material composition for sulfide-based inorganic solid electrolyte materials, a sulfide-based inorganic solid electrolyte material, a method for producing a sulfide-based inorganic solid electrolyte material, a solid electrolyte, a solid electrolyte membrane, an all-solid-state lithium ion battery, and a method for producing a diphosphorus pentasulfide composition.

BACKGROUND ART

In general, a lithium ion battery is used as a power supply of a small mobile device such as a mobile phone or a laptop. In addition, recently, the lithium ion battery has been used as a power supply of not only a small mobile device but also an electric vehicle, electric power storage, or the like.

In a currently commercially available lithium ion battery, an electrolytic solution including a combustible organic solvent is used. On the other hand, in a lithium ion battery (hereinafter, also referred to as "all-solid-state lithium ion battery") in which the electrolytic solution is replaced with a solid electrolyte such that the entire battery is made of a solid, a combustible organic solvent is not used in the battery. Therefore, it is considered that a safety device can be simplified and producing costs or productivity is excellent.

As a solid electrolyte material used for the solid electrolyte, for example, a sulfide-based inorganic solid electrolyte material is known. In addition, as a method for producing a sulfide-based inorganic solid electrolyte material, a method for treating a diphosphorus pentasulfide composition including diphosphorus pentasulfide ($P_2S_5$) as a main component with a material such as lithium sulfide is known.

Patent Document 1 (Japanese Unexamined Patent Publication No. 2020-61304) discloses a diphosphorus pentasulfide composition in which a degree of crystallinity calculated from a spectrum obtained by X-ray diffraction measurement using CuK$\alpha$ rays is 30% or more. In addition, it is described that a diphosphorus pentasulfide composition having a degree of crystallinity of 30% or more is obtained by performing vacuum heating or the like to reduce the amount of a low boiling point phosphorus sulfide compound ($P_4S_3$, $P_6S_5O_{10}$, or the like) in the diphosphorus pentasulfide composition and improve crystallinity.

RELATED DOCUMENT

PATENT DOCUMENT

Patent Document 1: Japanese Unexamined Patent Publication No. 2020-61304

SUMMARY OF THE INVENTION

TECHNICAL PROBLEM

The sulfide-based inorganic solid electrolyte material has excellent electrochemical stability and lithium ionic conductivity, but the lithium ionic conductivity is lower than that of an electrolytic solution.

From the above, the sulfide-based inorganic solid electrolyte material used for a lithium ion battery is required to further improve performance, and a diphosphorus pentasulfide composition useful for producing the sulfide-based inorganic solid electrolyte material is also required.

The present invention has been made in view of such circumstances, and a problem of the present invention is to provide a novel diphosphorus pentasulfide composition that is useful for producing a sulfide-based inorganic solid electrolyte material.

In addition, in a case where the producing method in the Patent Document 1 is adopted, since the heating temperature is high, there is a problem that the recovery rate of the diphosphorus pentasulfide composition after the production to the diphosphorus pentasulfide composition as a starting material is low and the production cost is high.

The present invention has been made in view of such circumstances, and a problem of the present invention is to provide a method for producing a diphosphorus pentasulfide composition, which has a high degree of crystallinity and a high recovery rate with respect to a starting material diphosphorus pentasulfide composition.

SOLUTION TO PROBLEM

The present inventors have conducted intensive studies in order to provide a diphosphorus pentasulfide composition that is useful for producing a sulfide-based inorganic solid electrolyte material. As a result, the present inventors have focused on the degree of crystallinity and the heat of fusion, and have completed the present invention.

[1] A diphosphorus pentasulfide composition,

in which a degree of crystallinity calculated from a spectrum obtained by X-ray diffraction using a CuKα ray as a ray source is equal to or more than 40% and equal to or less than 80%,
in a DSC curve of the diphosphorus pentasulfide composition obtained by measurement using a differential scanning calorimeter under conditions of a start temperature of 25°C, a measurement temperature range of equal to or more than 30°C and equal to or less than 350°C, a temperature rising rate of 5°C/min, and an argon atmosphere of 100 ml/min, an endothermic peak is observed in a temperature range of equal to or more than 280°C and equal to or less than 300°C, and
a heat of fusion of the endothermic peak is equal to or more than 60 J/g and equal to or less than 100 J/g.

[2] The diphosphorus pentasulfide composition according to [1],
in which a content of diphosphorus pentasulfide in the diphosphorus pentasulfide composition is equal to or more than 70% by mass.
[3] The diphosphorus pentasulfide composition according to [1] or [2],
in which the diphosphorus pentasulfide composition has a powder shape.
[4] The diphosphorus pentasulfide composition according to any one of [1] to [3],
in which a median diameter $d_{50}$ in a case where a cumulative frequency is 50% in a volume-based cumulative frequency distribution curve measured using a laser diffraction scattering-type particle size distribution analyzer is equal to or more than 1 μm and equal to or less than 150 μm.
[5] A starting material composition for sulfide-based inorganic solid electrolyte materials, the starting material composition including

the diphosphorus pentasulfide composition according to any one of [1] to [4], and
lithium sulfide.

[6] A sulfide-based inorganic solid electrolyte material including
a mechanically processed product of the diphosphorus pentasulfide composition according to any one of [1] to [4] and lithium sulfide.
[7] The sulfide-based inorganic solid electrolyte material according to [6],
in which a lithium ion conductivity measured by an alternating current impedance method under measurement conditions of 27.0°C, an applied voltage of 10 mV, and a measurement frequency range of 0.1 Hz to 7 MHz is equal to or more than $1.0 \times 10^{-3}$ S·cm$^{-1}$.
[8] The sulfide-based inorganic solid electrolyte material according to [6] or [7],
in which a maximum value of an oxidative decomposition current of the sulfide-based inorganic solid electrolyte material, which is measured under conditions of a temperature of 25°C, a sweep voltage range of 0 to 5 V, and a voltage sweep rate of 5 mV/sec, is equal to or less than 0.50 μA.
[9] A method for producing a sulfide-based inorganic solid electrolyte material, the method including
a step of mechanically processing the starting material composition for sulfide-based inorganic solid electrolyte materials according to [5].
[10] A solid electrolyte including
the sulfide-based inorganic solid electrolyte material according to any one of [6] to [8].
[11] A solid electrolyte membrane including
the solid electrolyte according to [10] as a main component.
[12] An all-solid-state lithium ion battery including

a positive electrode including a positive electrode active material layer,
an electrolyte layer, and
a negative electrode including a negative electrode active material layer,
in which at least one of the positive electrode active material layer, the electrolyte layer, or the negative electrode active material layer contains the sulfide-based inorganic solid electrolyte material according to any one of [6] to [8].

The present inventors have conducted intensive studies in order to provide a method for producing a diphosphorus pentasulfide composition, which achieves both a high degree of crystallinity and a high recovery rate. As a result, it was found that in the heating step for crystallizing the diphosphorus pentasulfide composition, by annealing the diphosphorus pentasulfide composition as a starting material at a low temperature equal to or less than the melting point, both a high degree of crystallinity and a high recovery rate of the obtained diphosphorus pentasulfide composition can be achieved, thereby leading to the present invention.

[1] A method for producing a diphosphorus pentasulfide composition, the method including

a heating step of subjecting a starting material diphosphorus pentasulfide composition to a heat treatment at a temperature which is equal to or more than 130°C and less than a melting point of the starting material diphosphorus pentasulfide composition,
in which a highly crystallized diphosphorus pentasulfide composition having a higher degree of crystallinity than the starting material diphosphorus pentasulfide composition is obtained.

[2] A method for producing a diphosphorus pentasulfide composition according to [1],
in which a degree of crystallinity of the highly crystallized diphosphorus pentasulfide composition, which is calculated from a spectrum obtained by X-ray diffraction using a CuKα ray as a ray source, is equal to or more than 40% and equal to or less than 80%.
[3] A method for producing a diphosphorus pentasulfide composition according to [1] or [2],
in which a recovery rate of the highly crystallized diphosphorus pentasulfide composition is equal to or more than 90% and equal to or less than 99%.
[4] A method for producing a diphosphorus pentasulfide composition according to any one of [1] to [3],
in which a heating time in the heating step is equal to or more than 0.5 hours and equal to or less than 24 hours.
[5] A method for producing a diphosphorus pentasulfide composition according to any one of [1] to [4],
in which a heating temperature in the heating step is equal to or more than 180°C and equal to or less than 220°C and a heating time in the heating step is equal to or more than 6 hours and equal to or less than 8 hours.
[6] A method for producing a diphosphorus pentasulfide composition according to any one of [1] to [5], the method including
performing the heating step in an inert gas atmosphere or a vacuum atmosphere.
[7] A method for producing a diphosphorus pentasulfide composition according to [6], the method including

performing the heating step in an inert gas atmosphere,
in which an inert gas in the inert gas atmosphere is an argon gas.

ADVANTAGEOUS EFFECTS OF INVENTION

According to the present invention, it is possible to provide a novel diphosphorus pentasulfide composition that is useful for producing a sulfide-based inorganic solid electrolyte material.
In addition, according to the present invention, it is possible to provide a method for producing a diphosphorus pentasulfide composition, which achieves both a high degree of crystallinity and a high recovery rate.

BRIEF DESCRIPTION OF THE DRAWINGS

[FIG. 1] A cross-sectional view showing an example of a structure of a lithium ion battery according to an embodiment of the present invention.
[FIG. 2] A diagram showing an X-ray diffraction spectrum of a diphosphorus pentasulfide composition obtained in Examples and Comparative Examples.
[FIG. 3] A diagram showing an X-ray diffraction spectrum for explaining a method for calculating a degree of crystallinity of a diphosphorus pentasulfide composition according to the embodiment of the present invention (peak separation method).
[FIG. 4] A diagram for describing a baseline used in a case of calculating a heat quantity of an endothermic peak.
[FIG. 5] A diagram showing a DSC curve of the diphosphorus pentasulfide composition on a high temperature side, which is obtained in Examples and Comparative Examples.
[FIG. 6] A diagram showing a DSC curve of the diphosphorus pentasulfide composition on a low temperature side, which is obtained in Examples and Comparative Examples.

DESCRIPTION OF EMBODIMENTS

Hereinafter, an embodiment of the present invention will be described using the drawings. In all the drawings, the same components are represented by common reference numerals, and the description thereof will not be repeated. In addition, the figures are schematic views and do not correspond to the actual dimensional ratios. Unless specified otherwise, a numerical range "A to B" represents equal to or more than A and equal to or less than B.

[Diphosphorus pentasulfide composition]

First, a diphosphorus pentasulfide composition according to the present embodiment will be described.

The present embodiment is a diphosphorus pentasulfide composition in which a degree of crystallinity calculated from a spectrum obtained by X-ray diffraction using a CuKα ray as a ray source is equal to or more than 40% and equal to or less than 80%, an endothermic peak is observed in a temperature range of equal to or more than 280°C and equal to or less than 300°C in a DSC curve of the diphosphorus pentasulfide composition measured by a differential scanning calorimeter, and a heat of fusion of the endothermic peak is equal to or more than 60 J/g and equal to or less than 100 J/g.

In order to obtain a diphosphorus pentasulfide composition according to the present embodiment having the above-described degree of crystallinity and heat of fusion,

(i) Heating temperature of starting material diphosphorus pentasulfide composition
(ii) Heating time of starting material diphosphorus pentasulfide composition
(iii) Atmosphere in heating step of starting material diphosphorus pentasulfide composition

It is preferable to appropriately select the above three points. Preferred aspects of the heating temperature, the heating time, and the atmosphere in the heating step will be described later in the section of [Method for producing diphosphorus pentasulfide composition], but (i) is preferably equal to or more than 130°C and less than a melting point of the starting material diphosphorus pentasulfide composition, (ii) is preferably equal to or more than 0.5 hours and equal to or less than 24 hours, and (iii) is preferably an inert gas atmosphere.

The degree of crystallinity of the diphosphorus pentasulfide composition according to the present embodiment, which is calculated from a spectrum obtained by X-ray diffraction using CuKα rays as a ray source, is equal to or more than 40% and equal to or less than 80%, and the lower limit value of the degree of crystallinity is equal to or more than 40%, preferably equal to or more than 45%, more preferably equal to or more than 50%, still more preferably equal to or more than 55%, even still more preferably equal to or more than 60%, and even still more preferably equal to or more than 63%.

In addition, the upper limit value of the degree of crystallinity is equal to or less than 80%, preferably equal to or less than 76%, more preferably equal to or less than 73%, still more preferably equal to or less than 70%, and even still more preferably equal to or less than 65%.

In the diphosphorus pentasulfide composition according to the present embodiment, since the degree of crystallinity is equal to or higher than the above-described lower limit value, the lithium ion conductivity of the obtained sulfide-based inorganic solid electrolyte material can be improved.

The reason for this is not necessarily clear, but it is considered that the content of the low-boiling point phosphorus sulfide compound ($P_4S_3$, $P_4S_7$, or the like) is low in the diphosphorus pentasulfide composition according to the present embodiment.

It is considered that the degree of crystallinity calculated from the spectrum obtained by the X-ray diffraction using the CuKα ray as a ray source indicates the amount of the low-boiling-point phosphorus sulfide compound ($P_4S_3$, $P_4S_7$, and the like) in the diphosphorus pentasulfide composition. In a case where the degree of crystallinity is high, it is considered that a low boiling point phosphorus sulfide compound ($P_4S_3$, $P_4S_7$, or the like) is crystallized in diphosphorus pentasulfide. In other words, it is considered that the higher the degree of crystallinity of the diphosphorus pentasulfide composition calculated from the X-ray diffraction spectrum is, the higher the crystallinity of the diphosphorus pentasulfide, and the smaller the amount of the low boiling point phosphorus sulfide compound ($P_4S_3$, $P_4S_7$, and the like) .

For the above-described reason, since the amount of the phosphorus sulfide compound having a low boiling point is small in the diphosphorus pentasulfide composition according to the present embodiment, the lithium ion conductivity of the obtained sulfide-based inorganic solid electrolyte material can be improved in a case where the diphosphorus pentasulfide composition according to the present embodiment is used. Therefore, it is considered to be useful for producing a sulfide-based inorganic solid electrolyte material.

In addition, in the diphosphorus pentasulfide composition according to the present embodiment, the degree of crystallinity is set to be equal to or less than the above-described upper limit value, whereby the recovery rate of the diphosphorus pentasulfide composition can be more suitably improved while suitably maintaining the lithium ion conductivity.

The reason for this is not necessarily clear, but it is considered that, by performing a treatment of excessively increasing the degree of crystallinity, not only the low-boiling point phosphorus sulfide compound ($P_4S_3$, $P_4S_7$, or the like) but also the target diphosphorus pentasulfide evaporates, and thus the recovery rate decreases.

Therefore, by setting the upper limit value of the degree of crystallinity of the diphosphorus pentasulfide composition according to the present embodiment to be equal to or less than the above-described upper limit value, it is considered that excessive crystallization treatment can be prevented, and both high recovery rate and lithium ion conductivity of the sulfide-based inorganic solid electrolyte material obtained by using the diphosphorus pentasulfide composition can be achieved, which makes the diphosphorus pentasulfide composition according to the present embodiment useful for producing the sulfide-based inorganic solid electrolyte material.

That is, the degree of crystallinity of the diphosphorus pentasulfide composition according to the present embodiment, which is calculated from the X-ray diffraction spectrum, is set to be equal to or more than the lower limit value and equal to or less than the upper limit value, whereby the recovery rate of the diphosphorus pentasulfide composition and the lithium ion conductivity of the sulfide-based inorganic solid electrolyte material produced using the diphosphorus pentasulfide composition are balanced.

In the present embodiment, the diphosphorus pentasulfide composition in which the degree of crystallinity calculated from the X-ray diffraction spectrum is equal to or more than the above-described lower limit value and equal to or less than the above-described upper limit value can be obtained, for example, by performing a treatment for reducing the amount of the low boiling point phosphorus sulfide compound ($P_4S_3$, $P_4S_7$, or the like) in the diphosphorus pentasulfide composition by performing a heat treatment on the starting material diphosphorus pentasulfide composition.

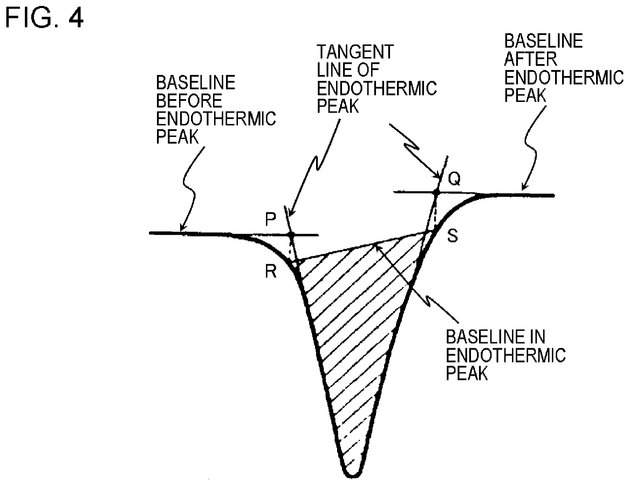

Here, a method for calculating the degree of crystallinity of the above-described diphosphorus pentasulfide composition will be described with reference to FIG. 4. FIG. 4 is a diagram showing an X-ray diffraction spectrum for describing a method for calculating a degree of crystallinity of the diphosphorus pentasulfide composition according to the present embodiment (peak separation method).

First, in the X-ray diffraction using a CuK$\alpha$ ray as a ray source, a diffraction curve corresponding to a crystalline phase is a sharp peak, and a diffraction curve corresponding to an amorphous phase is a broad halo due to scattering, and thus the ratio of the crystalline phase to the total of the crystalline phase and the amorphous phase can be calculated as the degree of crystallinity.

In the present embodiment, a peak separation method is used as a method for calculating the degree of crystallinity. The X-ray diffraction pattern (also referred to as a scattering curve) is separated into a crystalline diffraction curve and an amorphous halo using a profile fitting method without considering the influence of non-interference scattering, lattice disorder, and the like. For profile fitting, analysis software attached to the X-ray diffractometer can be used.

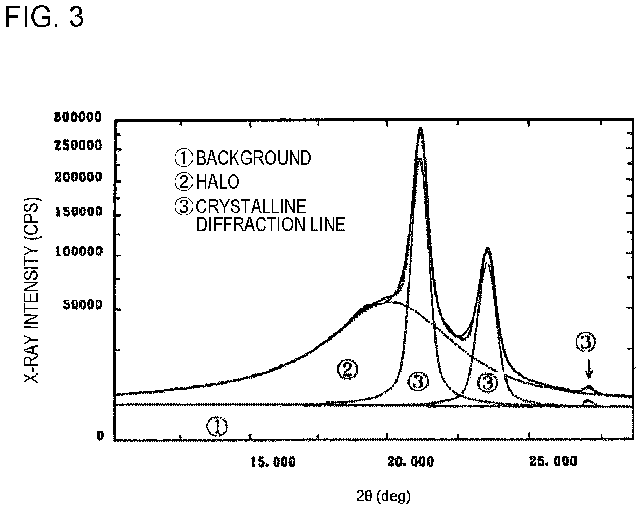

A specific procedure for calculating the degree of crystallinity is as follows (see FIG. 4; X-ray diffraction handbook, Rigaku Corporation, February 21, 2000, third edition, P.83, FIG. 3.6.2).

(1) Separation of background

The X-ray intensities from the low angle side to the high angle side are connected by a straight line, and the area below the straight line is used as the background.

(2) Separation of halo

The halo pattern due to the amorphous is estimated, and the halo is separated from the scattering curve from which the background is subtracted.

(3) Separation of crystalline diffraction curve

A crystalline diffraction curve is separated by the same method as in (2) described above.

(4) Calculation of degree of crystallinity

The degree of crystallinity is calculated from the following expression (X) using the area (integrated intensity) under the curve of the diffraction curve of the amorphous component (amorphous halo) and the diffraction curve of the crystalline component (crystalline diffraction curve), which are separated from the scattering curve.

$$Xc = \{Ic/(Ic+Ia)\} \times 100 \quad (X)$$

Ic: area (integrated intensity) under curve of diffraction curve (crystalline diffraction curve) of crystalline component

Ia: area (integrated intensity) under curve of diffraction curve (amorphous halo) of amorphous component

In addition, in a case where the diphosphorus pentasulfide composition includes a solvent, it is preferable to dry and remove the solvent from the diphosphorus pentasulfide composition and then carry out the measurement.

In addition, in a DSC curve of the diphosphorus pentasulfide composition according to the present embodiment, which is obtained by measurement with a differential scanning calorimeter, an endothermic peak is observed in a temperature range of equal to or more than 280°C and equal to or less than 300°C, and a heat of fusion of the endothermic peak is equal to or more than 60 J/g and equal to or less than 100 J/g or less, where a lower limit value of the heat of fusion of the endothermic peak is preferably equal to or more than 62 J/g, more preferably equal to or more than 65 J/g, still more preferably equal to or more than 68 J/g, still more preferably equal to or more than 70 J/g, still more preferably equal to or more than 72 J/g, still more preferably equal to or more than 75 J/g, and still more preferably equal to or more than 77 J/g.

In addition, the upper limit value of the heat of fusion of the endothermic peak is preferably equal to or less than 97 J/g, more preferably equal to or less than 95 J/g, still more preferably equal to or less than 90 J/g, still more preferably equal to or less than 85 J/g, and still more preferably equal to or less than 82 J/g.

Here, the endothermic peak observed in the temperature range of equal to or more than 280°C and equal to or less than 300°C is the melting point of diphosphorus pentasulfide ($P_2S_5$).

In the diphosphorus pentasulfide composition according to the present embodiment, an endothermic peak is observed in a temperature range of equal to or more than 280°C and equal to or less than 300°C in a DSC curve, and the heat of fusion of the endothermic peak is equal to or more than the above-described lower limit value, whereby the lithium ion conductivity of the obtained sulfide-based inorganic solid electrolyte material can be improved.

The reason for this is not necessarily clear, but it is considered that the content of the low-boiling point phosphorus sulfide compound ($P_4S_3$, $P_4S_7$, or the like) is low in the diphosphorus pentasulfide composition according to the present embodiment.

It is considered that the heat of fusion of the endothermic peak measured by the above method indicates the amount of the low-boiling point phosphorus sulfide compound ($P_4S_3$, $P_4S_7$, and the like) in the diphosphorus pentasulfide composition. That is, it is considered that the higher the heat of fusion of the endothermic peak, the higher the degree of crystallinity of the diphosphorus pentasulfide composition, and the low boiling point phosphorus sulfide compound ($P_4S_3$, $P_4S_7$, or the like) is crystallized in the diphosphorus pentasulfide. As a result, it is considered that the diphosphorus pentasulfide composition according to the present embodiment has high crystallinity of diphosphorus pentasulfide and a small amount of a low boiling point phosphorus sulfide compound ($P_4S_3$, $P_4S_7$, and the like).

For the above-described reason, since the amount of the phosphorus sulfide compound having a low boiling point is small in the diphosphorus pentasulfide composition according to the present embodiment, the lithium ion conductivity of the obtained sulfide-based inorganic solid electrolyte material can be improved in a case where the diphosphorus pentasulfide composition according to the present embodiment is used. Therefore, it is considered to be useful for producing a sulfide-based inorganic solid electrolyte material.

In addition, in the diphosphorus pentasulfide composition according to the present embodiment, since the heat of fusion is equal to or smaller than the above-described upper limit value, the recovery rate of the diphosphorus pentasulfide composition can be more suitably improved while suitably maintaining the lithium ion conductivity.

The reason for this is not always clear, but it is considered that, by performing a treatment to excessively increase the crystallinity, not only the low-boiling point phosphorus sulfide compound ($P_4S_3$, $P_4S_7$, or the like) but also the target diphosphorus pentasulfide evaporates, and thus the recovery rate decreases.

Therefore, by setting the upper limit value of the degree of crystallinity of the diphosphorus pentasulfide composition according to the present embodiment to be equal to or less than the above-described upper limit value, it is considered that excessive crystallization treatment can be prevented, and both high recovery rate and lithium ion conductivity of the sulfide-based inorganic solid electrolyte material obtained by using the diphosphorus pentasulfide composition can be achieved, which makes the diphosphorus pentasulfide composition according to the present embodiment useful for producing the sulfide-based inorganic solid electrolyte material.

In the present embodiment, the diphosphorus pentasulfide composition in which an endothermic peak is observed in a temperature range of equal to or more than 280°C and equal to or less than 300°C in the DSC curve can be obtained, for example, by performing a treatment for reducing the amount of the low boiling point phosphorus sulfide compound ($P_4S_3$, $P_4S_7$, or the like) in the diphosphorus pentasulfide composition by performing a heat treatment on the starting material diphosphorus pentasulfide composition.

The DSC curve can be measured, for example, by the following method.

First, 20 to 25 mg of the diphosphorus pentasulfide composition is weighed in an aluminum pan in an argon atmosphere, and then the aluminum lid is covered and sealed with a sample sealer. The aluminum container of the reference is in an empty state. Differential scanning calorimetry is performed using a differential scanning calorimeter under conditions of a start temperature of 25°C, a measurement temperature range of 30°C to 350°C, a temperature rising rate of 5°C/min, and an atmosphere of 100 ml/min of argon. In addition, the differential scanning calorimeter is not particularly limited, and for example, DSC6300 manufactured by Seiko Instruments Inc. can be used.

In addition, in a case where the diphosphorus pentasulfide composition contains a solvent, it is preferable to dry and remove the solvent from the diphosphorus pentasulfide composition and then carry out the measurement.

From the DSC curve obtained in this manner, the presence or absence of an endothermic peak in a temperature range of equal to or more than 280°C and equal to or less than 300°C can be observed.

Here, the heat of fusion of the endothermic peak is calculated by obtaining an area surrounded by a melting endothermic curve including the endothermic peak and a baseline. Since the intrinsic heat capacity of the substance is different before and after the thermal change, the baseline before and after the endothermic peak is not a straight line.

Therefore, in the present embodiment, the baseline at the endothermic peak is a line connecting the point R and the point S shown in FIG. 4. The point R is an intersection between a line that passes through an intersection P of a baseline before the endothermic peak and a tangent line of the endothermic peak and is parallel to the Y-axis and the melting endothermic curve. The point S is an intersection between a line that passes through an intersection Q of the baseline after the endothermic peak and the tangent line of the endothermic peak and is parallel to the Y-axis and the melting endothermic curve.

In addition, in the diphosphorus pentasulfide composition according to the present embodiment, the endothermic peak observed in a temperature range of equal to or more than 280°C and equal to or less than 300°C is usually one.

In the diphosphorus pentasulfide composition according to the present embodiment, from the viewpoint that the lithium ion conductivity of the obtained sulfide-based inorganic solid electrolyte material can be further improved, it is preferable that in the above-described DSC curve, an exothermic peak is not observed in a temperature range of at least equal to or more than 120°C and equal to or less than 140°C, and it is more preferable that in the above-described DSC curve, an exothermic peak is not observed in a temperature range of at least equal to or more than 30°C and equal to or less than 280°C.

In the present embodiment, the fact that a peak is not observed in the DSC curve means that a peak with a heat quantity of equal to or more than 0.3 J/g, preferably equal to or more than 0.1 J/g is not observed.

In addition, in the present embodiment, the heat quantity at the exothermic peak and the baseline at the exothermic peak can be defined by the same method as the heat quantity at the endothermic peak and the baseline at the endothermic peak.

In the present embodiment, the diphosphorus pentasulfide composition in which an exothermic peak is not observed in the above-described temperature range in the DSC curve can be obtained, for example, by performing a treatment for reducing the amount of the low boiling point phosphorus sulfide compound ($P_4S_3$, $P_4S_7$, and the like) in the diphosphorus pentasulfide composition by performing a heat treatment on the starting material diphosphorus pentasulfide composition.

The diphosphorus pentasulfide composition according to the present embodiment includes diphosphorus pentasulfide ($P_2S_5$) as a main component. In the diphosphorus pentasulfide composition according to the present embodiment, examples of the component included in addition to the diphosphorus pentasulfide ($P_2S_5$) include $P_4S_9$, $P_4S_7$, $P_4S_3$, and the like.

In this case, the lower limit value of the content of the diphosphorus pentasulfide in the diphosphorus pentasulfide composition according to the present embodiment is preferably equal to or more than 70% by mass, more preferably equal to or more than 75% by mass, and still more preferably equal to or more than 80% by mass, in a case where the total content of $P_2S_5$, $P_4S_9$, $P_4S_7$, and $P_4S_3$ in the phosphorus sulfide composition is set to 100% by mass. In a case where the lower limit value of the content of the diphosphorus pentasulfide is equal to or more than the above-described lower limit value, the lithium ion conductivity of the obtained sulfide-based inorganic solid electrolyte material can be further improved. The upper limit of the content of the diphosphorus pentasulfide included in the diphosphorus pentasulfide composition according to the present embodiment is not particularly limited, but is, for example, equal to or less than 100% by mass.

The content of the diphosphorus pentasulfide included in the diphosphorus pentasulfide composition can be calculated, for example, by a solid $^{31}$P-NMR spectrum.

The solid $^{31}$P-NMR spectrum can be measured, for example, by the following method.

First, in a glove box purged with $N_2$ gas, a measurement sample tube having a diameter of 3.2 mm is filled with a test sample and is spun ((MAS (magic angle spinning)) in a state where it is inclined at a magic angle (54.7 degrees) with respect to an external magnetic field to perform the measurement under the following conditions.

Device: JNM-ECA-600 manufactured by JEOL RESONANCE Inc.
Observation frequency: 242.95 MHz
Pulse width: 90° pulse
Pulse waiting time: 2800 seconds
Number of integrations: 64 times
Measurement mode: a single pulse method
MAS rate: 12 kHz

Reference material: $(NH_4)_2HPO_4 \cdot 1.33$ ppm

For the peak detected in the $^{31}$P-NMR spectrum of the test sample, the following peak attribution is referred to, waveform separation is carried out using a Gaussian function, and the integral value of each peak is calculated, with reference to Reference 1 "Hellmut Eckert, Cheryl S. Liang and Galen D. Stucky: $^{31}$P magic angle spinning NMR of crystalline phosphorus sulfides. Correlation of $^{31}$P chemical shielding tensors with local environments, J. Phys. Chem, 1989, 93, 452-457". The integrated value of the peak derived from each of the components is proportional to the molar number of phosphorus included. Therefore, a content ratio can be calculated based on the obtained integrated value and the molecular weight of each of the components.

The chemical shift of $P_2S_5$ is 40 to 52 ppm, the chemical shift of $P_4S_9$ is 52 to 70 ppm, the chemical shift of $P_4S_7$ is 80 to 90 ppm, 90 to 100 ppm, and 110 to 115 ppm, and the chemical shift of $P_4S_3$ is 80 to 90 ppm and 90 to 100 ppm.

In the diphosphorus pentasulfide composition according to the present embodiment, it is preferable that a peak is not observed in a range of equal to or more than 52 ppm and equal to or less than 70 ppm in a solid $^{31}$P-NMR spectrum. That is, it is preferable that the peak of $P_4S_9$ is not observed. In this manner, the proportion of the diphosphorus pentasulfide in the diphosphorus pentasulfide composition can be increased, and the lithium ion conductivity of the obtained sulfide-based inorganic solid electrolyte material can be further improved.

In the diphosphorus pentasulfide composition according to the present embodiment, it is preferable that a peak is not observed in a range of equal to or more than 80 ppm and equal to or less than 90 ppm in a solid $^{31}$P-NMR spectrum. That is, it is preferable that the peaks of $P_4S_7$ and $P_4S_3$ are not observed. In this manner, the proportion of the diphosphorus pentasulfide in the diphosphorus pentasulfide composition can be increased, and the lithium ion conductivity of the obtained sulfide-based inorganic solid electrolyte material can be further improved.

The shapes of the diphosphorus pentasulfide composition according to the present embodiment are preferably powdery shapes. Since the sulfide-based inorganic solid electrolyte material to be described later is generally produced by a dry method, in a case where the shapes of the diphosphorus pentasulfide composition according to the present embodiment are powdery shapes, the production of the sulfide-based inorganic solid electrolyte material is facilitated.

In the diphosphorus pentasulfide composition according to the present embodiment, the median diameter $d_{50}$ in which the cumulative number is 50% in a volume-based cumulative frequency distribution curve as measured using a laser diffraction scattering-type particle size distribution analyzer is preferably equal to or more than 1 $\mu$m and equal to or less than 150 $\mu$m, more preferably equal to or more than 3 $\mu$m and equal to or less than 100 $\mu$m, still more preferably equal to or more than 5 $\mu$m and equal to or less than 75 $\mu$m, still more preferably equal to or more than 10 $\mu$m and equal to or less than 50 $\mu$m, still more preferably equal to or more than 20 $\mu$m and equal to or less than 50 $\mu$m, still more preferably equal to or more than 30 $\mu$m and equal to or less than 50 $\mu$m, and still more preferably equal to or more than 40 $\mu$m and equal to or less than 50 $\mu$m.

By setting the median diameter $d_{50}$ of the diphosphorus pentasulfide composition within the above-described range, the handleability during the production of the sulfide-based inorganic solid electrolyte material is improved, the reaction efficiency during the production of the sulfide-based inorganic solid electrolyte material is improved, and the production efficiency of the sulfide-based inorganic solid electrolyte material can be improved.

From the viewpoint of improving handleability during the production of the sulfide-based inorganic solid electrolyte material, the lower limit value of the median diameter $d_{50}$ of the diphosphorus pentasulfide composition according to the present embodiment is preferably equal to or more than 1 $\mu$m, more preferably equal to or more than 3 $\mu$m, still more preferably equal to or more than 5 $\mu$m, still more preferably equal to or more than 10 $\mu$m, still more preferably equal to or more than 20 $\mu$m, still more preferably equal to or more than 30 $\mu$m, and still more preferably equal to or more than 40 $\mu$m.

In addition, in the diphosphorus pentasulfide composition according to the present embodiment, the upper limit value of the median diameter $d_{50}$ is preferably equal to or less than 150 $\mu$m, more preferably equal to or less than 100 $\mu$m, still more preferably equal to or less than 75 $\mu$m, and still more preferably equal to or less than 50 $\mu$m, from the viewpoint of improving the reaction efficiency during the production of the sulfide-based inorganic solid electrolyte material and improving the production efficiency of the sulfide-based inorganic solid electrolyte material.

[Method for producing diphosphorus pentasulfide composition]

Next, a method for producing a diphosphorus pentasulfide composition according to the present embodiment will be described.

The method for producing a diphosphorus pentasulfide composition according to the present embodiment is different from the method for producing a diphosphorus pentasulfide composition in the related art. That is, the highly crystallized diphosphorus pentasulfide composition according to the present embodiment can be obtained for the first time by adopting a method for performing a heating treatment on the starting material diphosphorus pentasulfide composition to reduce the amount of the low boiling point phosphorus sulfide compound ($P_4S_3$, $P_4S_7$, and the like) in the starting material diphosphorus pentasulfide composition, or the like.

However, in the method for producing a diphosphorus pentasulfide composition according to the present embodiment, for example, various specific production conditions can be adopted on the premise that the above-described improvement points in the production method are adopted.

The method for producing a diphosphorus pentasulfide composition according to the present embodiment includes a heating step of subjecting a starting material diphosphorus pentasulfide composition to a heating treatment at a temperature which is equal to or more than 130°C and less than a melting point of the starting material diphosphorus pentasulfide composition, and the method for producing a diphosphorus pentasulfide composition according to the present embodiment is a method for producing a highly crystallized diphosphorus pentasulfide composition having a higher degree of crystallinity than the starting material diphosphorus pentasulfide composition.

Since the method for producing a diphosphorus pentasulfide composition according to the present embodiment adopts the above-described configuration, the temperature of the starting material diphosphorus pentasulfide composition is heated to a temperature less than the melting point, and thus it is possible to effectively remove only the phosphorus sulfide compound ($P_4S_3$, $P_4S_7$, and the like) having a low boiling point while minimizing the evaporation of the diphosphorus pentasulfide contained in the diphosphorus pentasulfide composition.

Hereinafter, the method for producing a diphosphorus pentasulfide composition according to the present embodiment will be described in more detail.

(Heating step)

In the method for producing a diphosphorus pentasulfide composition according to the present embodiment, by heat-treating the starting material diphosphorus pentasulfide composition, the amount of the low boiling point phosphorus sulfide compound ($P_4S_3$, $P_4S_7$, and the like) in the starting material diphosphorus pentasulfide composition is reduced, and the crystallinity of the starting material diphosphorus pentasulfide composition is improved. In this manner, a highly crystallized diphosphorus pentasulfide composition having a high degree of crystallinity can be obtained from the starting material diphosphorus pentasulfide composition according to the present embodiment. Here, in a case where the starting material diphosphorus pentasulfide composition is heated, the components that are accumulated at the bottom of the container without being evaporated are usually the highly crystallized diphosphorus pentasulfide composition according to the present embodiment.

Here, the lower limit value of the heating temperature in the heating step is preferably equal to or more than 130°C, more preferably equal to or more than 150°C, and still more preferably equal to or more than 180°C. By setting the heating temperature to equal to or more than the above-described lower limit value, the degree of crystallinity of the highly crystallized diphosphorus pentasulfide composition can be more suitably set.

In addition, the upper limit value of the heating temperature in the heating step is preferably less than the melting point of the starting material diphosphorus pentasulfide composition, more preferably equal to or less than 250°C, and still more preferably equal to or less than 220°C. By setting the heating temperature to equal to or less than the above-described upper limit value, the recovery rate of the highly crystallized diphosphorus pentasulfide composition can be more suitably improved.

The melting point of the starting material diphosphorus pentasulfide composition can be confirmed by a DSC curve described later.

In the method for producing a diphosphorus pentasulfide composition according to the present embodiment, the starting material diphosphorus pentasulfide composition is heat-treated in a temperature range of equal to or more than the above-described lower limit value and equal to or less than the above-described upper limit value, whereby a diphosphorus pentasulfide composition having both a high degree of crystallinity and a high recovery rate can be obtained.

The reason for this is not always clear, but it is considered that, in the method for producing a diphosphorus pentasulfide composition according to the present embodiment, the reason is that the structure of the starting material diphosphorus pentasulfide composition is temporarily made unstable by heating the starting material diphosphorus pentasulfide composition to a temperature less than the melting point thereof and the diphosphorus pentasulfide in a glass state is easily changed to a more stable crystal state, and that only the low boiling point phosphorus sulfide compound ($P_4S_3$, $P_4S_7$, or the like) is removed and the evaporation of the diphosphorus pentasulfide can be minimized.

At present, it is considered that the degree of crystallinity of the diphosphorus pentasulfide composition calculated from the X-ray diffraction spectrum and the lithium ion conductivity of the sulfide-based inorganic solid electrolyte material obtained from the diphosphorus pentasulfide are closely related to each other. In addition, it is considered that the higher the degree of crystallinity of the diphosphorus pentasulfide composition calculated from the X-ray diffraction spectrum, the higher the crystallinity of the diphosphorus pentasulfide, and the smaller the amount of the low boiling point phosphorus sulfide compound ($P_4S_3$, $P_4S_7$, and the like). Therefore, a vacuum heating treatment or the like has been performed to remove a phosphorus sulfide compound ($P_4S_3$, $P_4S_7$, or the like) having a low boiling point. However, since the heating was carried out at a temperature equal to or more than the melting point of the diphosphorus pentasulfide composition (for example, 300°C), it is considered that a part of the diphosphorus pentasulfide included in the diphosphorus pentasulfide composition was also evaporated, and thus the recovery rate was decreased.

On the other hand, in the method for producing a diphosphorus pentasulfide composition according to the present embodiment, since the starting material diphosphorus pentasulfide composition is heated to a temperature less than the melting point, it is possible to effectively remove only the phosphorus sulfide compound ($P_4S_3$, $P_4S_7$, and the like) having a low boiling point while minimizing the evaporation of the diphosphorus pentasulfide contained in the diphosphorus pentasulfide composition.

For the above reason, it is considered that since the low-boiling point phosphorus sulfide compound is effectively removed in the method for producing a diphosphorus pentasulfide composition according to the present embodiment, both a high degree of crystallinity and a high recovery rate can be achieved in a case where the method for producing a diphosphorus pentasulfide composition according to the present embodiment is used.

In the method for producing a diphosphorus pentasulfide composition according to the present embodiment, the upper limit value of the recovery rate of the highly crystallized diphosphorus pentasulfide composition is preferably equal to or more than 90%, more preferably equal to or more than 91%, and still more preferably equal to or more than 92%. In a case where the recovery rate is equal to or more than the lower limit value, the production efficiency of the highly crystallized diphosphorus pentasulfide composition can be improved.

In addition, the lower limit value of the above-described recovery rate is not particularly limited, but is preferably equal to or less than 99%, more preferably equal to or less than 98%, and still more preferably equal to or less than 97%. In a case where the recovery rate is equal to or less than the above-described upper limit value, the amount of the low-boiling point phosphorus sulfide compound ($P_4S_3$, $P_4S_7$, and the like) in the above-described starting material diphosphorus pentasulfide composition can be reduced.

The recovery rate refers to a proportion of the mass of the highly crystallized diphosphorus pentasulfide composition after heating with respect to the mass of the starting material diphosphorus pentasulfide composition, and can be calculated from the following Equation (Y).

$$\texttt{Recovery rate (\%) = } (M_A/M_B) \texttt{ × 100 (Y)}$$

$M_A$: mass (g) of highly crystallized diphosphorus pentasulfide composition
$M_B$: mass (g) of starting material diphosphorus pentasulfide composition

In the method for producing a diphosphorus pentasulfide composition according to the present embodiment, the lower limit value of the heating time of the starting material diphosphorus pentasulfide composition in the heating step is preferably equal to or more than 0.5 hours, more preferably equal to or more than 3 hours, even more preferably equal to or more than 5 hours, and particularly preferably equal to or more than 6 hours. In a case where the heating time is equal to or more than the above-described lower limit value, the degree of crystallinity of the highly crystallized diphosphorus pentasulfide composition can be more suitably improved.

In addition, the upper limit value of the heating time is preferably equal to or less than 24 hours, more preferably equal to or less than 12 hours, still more preferably equal to or less than 10 hours, and still more preferably equal to or less than 8 hours. In a case where the heating time is equal to or less than the above-described upper limit value, the recovery rate of the highly crystallized diphosphorus pentasulfide composition can be more suitably improved.

In the method for producing a diphosphorus pentasulfide composition according to the present embodiment, the heating temperature and the heating time can be appropriately determined depending on the treatment amount of the starting material diphosphorus pentasulfide composition, the recovery rate and physical properties required for the highly crystallized diphosphorus pentasulfide composition to be produced, and the like. Among these, from the viewpoint of the balance between the recovery rate and the degree of crystallinity of the highly crystallized diphosphorus pentasulfide composition, the heating temperature is preferably equal to or more than 180°C and equal to or less than 220°C, and the heating time is preferably equal to or more than 6 hours and equal to or less than 8 hours.

In the method for producing a diphosphorus pentasulfide composition according to the present embodiment, the heating step is preferably performed in an inert gas atmosphere or a vacuum atmosphere, and more preferably performed in an inert gas atmosphere. By adopting the above-described configuration, it is possible to prevent the reaction with each component or moisture in the air and to prevent the generation of impurities in the diphosphorus pentasulfide composition. In particular, it is preferable that the heating step is performed in an inert gas atmosphere from the viewpoint of easily maintaining the atmosphere in the heating device. The vacuum atmosphere means that the pressure in the heating device is equal to or less than -0.01 MPa.

Examples of the inert gas in the heating step include argon gas, helium gas, nitrogen gas, and the like. Among these, argon gas is particularly preferable. In order to prevent impurities from being mixed in a product, it is preferable that the purity of the inert gas is as high as possible. In addition, in order to avoid contact with water, the dew point is preferably equal to or less than -70°C and more preferably equal to or less than -80°C. A method for introducing the inert gas into the mixed system is not particularly limited as long as it is a method capable of filling the mixed system with the inert gas atmosphere. Examples of the method for introducing the inert gas into the mixed system include a method for purging inert gas and a method for continuously introducing inert gas at a given flow rate.

(Preparation step)

The method for producing a diphosphorus pentasulfide composition according to the present embodiment may include a preparation step of preparing a starting material diphosphorus pentasulfide composition before the heating step.
The starting material diphosphorus pentasulfide composition used as a starting material is not particularly limited, and commercially available phosphorus pentasulfide ($P_2S_5$) may be used as it is, or a starting material phosphorus pentasulfide composition obtained by a generally known method for producing phosphorus pentasulfide may be used.

[Sulfide-based inorganic solid electrolyte material]

Hereinafter, the sulfide-based inorganic solid electrolyte material according to the present embodiment will be described.
The sulfide-based inorganic solid electrolyte material according to the present embodiment can be obtained by using, as a starting material, a starting material composition for sulfide-based inorganic solid electrolyte materials including the diphosphorus pentasulfide composition according to the present embodiment and lithium sulfide. That is, the sulfide-based inorganic solid electrolyte material according to the present embodiment preferably includes a mechanically processed product of a starting material composition for sulfide-based inorganic solid electrolyte materials including the diphosphorus pentasulfide composition according to the present embodiment and lithium sulfide.
From the viewpoint of further improving the electrochemical stability and the stability in water and air, and the handleability, it is preferable that the sulfide-based inorganic solid electrolyte material according to the present embodiment includes Li, P, and S as constituent elements.
In addition, from the viewpoint of further improving the lithium ionic conductivity, the electrochemical stability, the stability in water and air, and the handleability of the sulfide-based inorganic solid electrolyte material according to the present embodiment, a molar ratio (Li/P) of the content of Li to the content of P in the sulfide-based inorganic solid electrolyte material is preferably equal to or more than 1.0 and equal to or less than 5.0, more preferably equal to or more than 2.0 and equal to or less than 4.0, still more preferably equal to or more than 2.5 and equal to or less than 3.8, still more preferably equal to or more than 2.8 and equal to or less than 3.6, still more preferably equal to or more than 3.0 and equal to or less than 3.5, still more preferably equal to or more than 3.1 and equal to or less than 3.4, and still more preferably equal to or more than 3.1 and equal to or less than 3.3. More specifically, from the viewpoint of further improving the performance balance such as the electrochemical stability, the stability in water or air, and the handleability, the lower limit value of the molar ratio (Li/P) of the content of Li to the content of P in the sulfide-based inorganic solid electrolyte material is preferably equal to or more than 1.0, more preferably equal to or more than 2.0, still more preferably equal to or more than 2.5, still more preferably equal to or more than 2.8, still more preferably equal to or more than 3.0, and still more preferably equal to or more than 3.1. In addition, from the viewpoint of further improving the performance balance such as the electrochemical stability, the stability in water and air, and the handleability, the upper limit value of the molar ratio (Li/P) of the content of Li to the content of P in the sulfide-based inorganic solid electrolyte material is preferably equal to or less than 5.0, more preferably equal to or less than 4.0, still more preferably equal to or less than 3.8, still more preferably equal to or less than 3.6, still more preferably equal to or less than 3.5, still more preferably equal to or less than 3.4, and still more preferably equal to or less than 3.3.
A molar ratio S/P of the content of S to the content of P is preferably equal to or more than 2.0 and equal to or less than 6.0, more preferably equal to or more than 3.0 and equal to or less than 5.0, still more preferably equal to or more than 3.5 and equal to or less than 4.5, still more preferably equal to or more than 3.8 and equal to or less than 4.2, still more preferably equal to or more than 3.9 and equal to or less than 4.1, and still more preferably 4.0. More specifically, from the viewpoint of further improving the performance balance such as the electrochemical stability, the stability in water and air, and the handleability, the lower limit value of the molar ratio (S/P) of the content of S to the content of P is preferably equal to or more than 2.0, more preferably equal to or more than 3.0, still more preferably equal to or more than 3.5, still more preferably equal to or more than 3.8, still more preferably equal to or more than 3.9, and still more preferably 4.0. In addition, from the viewpoint of further improving the performance balance such as the electrochemical stability, the stability in water and air, and the handleability, the upper limit value of the molar ratio (S/P) of the content of S to the content of P is preferably equal to or less than 6.0, more preferably equal to or less than 5.0, still more preferably equal to or less than 4.5, still more preferably equal to or less than 4.2, still more preferably equal to or less than 4.1, and still more preferably 4.0.
Here, the contents of Li, P, and S in the sulfide-based inorganic solid electrolyte material according to the present embodiment can be obtained by, for example, ICP Emission Spectroscopy or X-ray analysis.

In the sulfide-based inorganic solid electrolyte material according to the present embodiment, the lithium ion conductivity of the sulfide-based inorganic solid electrolyte material, which is measured by an alternating current impedance method under the measurement conditions of 27.0°C, an applied voltage of 10 mV, and a measurement frequency range of 0.1 Hz to 7 MHz, is preferably equal to or more than $1.0 \times 10^{-3}$ S·cm$^{-1}$, more preferably equal to or more than $1.1 \times 10^{-3}$ S·cm$^{-1}$, still more preferably equal to or more than $1.3 \times 10^{-3}$ S·cm$^{-1}$, and particularly preferably equal to or more than $1.5 \times 10^{-3}$ S·cm$^{-1}$.

When the lithium ionic conductivity of the sulfide-based inorganic solid electrolyte material according to the present embodiment is the above-described lower limit value or more, a lithium ion battery having further improved battery characteristics can be obtained. Further, by using the above-described sulfide-based inorganic solid electrolyte material, a lithium ion battery having further improved input and output characteristics can be obtained.

The upper limit value of the lithium ion conductivity of the sulfide-based inorganic solid electrolyte material according to the present embodiment is not particularly limited, but is, for example, equal to or less than $3.0 \times 10^{-3}$ S·cm$^{-1}$, equal to or less than $2.8 \times 10^{-3}$ S·cm$^{-1}$, and equal to or less than $2.5 \times 10^{-3}$ S·cm$^{-1}$.

Examples of the shape of the sulfide-based inorganic solid electrolyte material according to the present embodiment include a particle shape.

The particle-shaped sulfide-based inorganic solid electrolyte material according to the present embodiment is not particularly limited, but the median diameter $d_{50}$ in which the cumulative frequency is 50% in a volume-based cumulative frequency distribution curve which measured using a laser diffraction scattering-type particle size distribution analyzer is preferably equal to or more than 1 $\mu$m, more preferably equal to or more than 3 $\mu$m, and still more preferably equal to or more than 5 $\mu$m. In a case where the median diameter $d_{50}$ of the sulfide-based inorganic solid electrolyte material is set to be equal to or more than the above-described lower limit value, it is possible to maintain good handleability.

In addition, the upper limit value of the median diameter $d_{50}$ is preferably equal to or less than 150 $\mu$m, more preferably equal to or less than 120 $\mu$m, and still more preferably equal to or less than 100 $\mu$m.

By setting the median diameter $d_{50}$ of the sulfide-based inorganic solid electrolyte material to be equal to or less than the above-described upper limit value, the lithium ion conductivity can be further improved.

It is preferable that the sulfide-based inorganic solid electrolyte material according to the present embodiment has excellent electrochemical stability. Here, the electrochemical stability refers to, for example, a property in which a material is not likely to be oxidized and reduced in a wide voltage range. More specifically, in the sulfide-based inorganic solid electrolyte material according to the present embodiment, the maximum value of the oxidative decomposition current of the sulfide-based inorganic solid electrolyte material measured under the conditions of a temperature of 25°C, a sweep voltage range of 0 to 5 V, and a voltage sweep rate of 5 mV/sec is preferably equal to or less than 0.50 $\mu$A, more preferably equal to or less than 0.20 $\mu$A, still more preferably equal to or less than 0.10 $\mu$A, still more preferably equal to or less than 0.05 $\mu$A, still more preferably equal to or less than 0.03 $\mu$A, and still more preferably equal to or less than 0.02 $\mu$A.

When the maximum value of the oxidative decomposition current in the sulfide-based inorganic solid electrolyte material is equal to or less than the above-described upper limit value, the oxidative decomposition of the sulfide-based inorganic solid electrolyte material in the lithium ion battery can be suppressed, which is preferable.

The lower limit value of the maximum value of the oxidative decomposition current in the sulfide-based inorganic solid electrolyte material is not particularly limited and is, for example, equal to or more than 0.0001 $\mu$A.

The sulfide-based inorganic solid electrolyte material according to the present embodiment can be used for any application where lithium ionic conductivity is required. In particular, it is preferable that the sulfide-based inorganic solid electrolyte material according to the present embodiment is used for a lithium ion battery. More specifically, the sulfide-based inorganic solid electrolyte material according to the present embodiment is used for a positive electrode active material layer, a negative electrode active material layer, an electrolyte layer, or the like in a lithium ion battery. Further, the sulfide-based inorganic solid electrolyte material according to the present embodiment is suitably used for a positive electrode active material layer, a negative electrode active material layer, a solid electrolyte layer, or the like forming an all-solid-state lithium ion battery, and is more suitably used for a solid electrolyte layer forming an all-solid-state lithium ion battery.

Examples of the all-solid-state lithium ion battery to which the sulfide-based inorganic solid electrolyte material according to the present embodiment is applied include an all-solid-state lithium ion battery in which a positive electrode, a solid electrolyte layer, and a negative electrode are stacked in this order.

[Method for producing sulfide-based inorganic solid electrolyte material]

Next, a method for producing a sulfide-based inorganic solid electrolyte material according to the present embodiment will be described.

The method for producing a sulfide-based inorganic solid electrolyte material according to the present embodiment preferably includes, for example, a step of mechanically treating a starting material composition for sulfide-based inorganic solid electrolyte materials including the diphosphorus pentasulfide composition according to the present embodiment and lithium sulfide.

More specifically, the sulfide-based inorganic solid electrolyte material according to the present embodiment can be obtained using a producing method including steps (A) and (B) described below. In addition, the method for producing a sulfide-based inorganic solid electrolyte material according to the present embodiment optionally further includes steps (C) and (D) described below.

Step (A): a step of preparing a starting material composition for sulfide-based inorganic solid electrolyte materials including the diphosphorus pentasulfide composition according to the present embodiment and lithium sulfide

Step (B): a step of obtaining sulfide-based inorganic solid electrolyte materials in a glass state subjecting to by performing mechanical treatment to a starting material composition for sulfide-based inorganic solid electrolyte materials to vitrify a diphosphorus pentasulfide composition and lithium sulfide as a starting material, while carrying out a chemical reaction

Step (C): a step of heating the obtained sulfide-based inorganic solid electrolyte material in the glass state and crystallizing least a part thereof

Step (D): a step of crushing, classifying, or granulating the obtained sulfide-based inorganic solid electrolyte material

(Step (A) of preparing a starting material composition for sulfide-based inorganic solid electrolyte materials)

First, a starting material composition for sulfide-based inorganic solid electrolyte materials including the diphosphorus pentasulfide composition according to the present embodiment and lithium sulfide as a starting material, and optionally further including lithium nitride is prepared. Here, a mixing ratio between the respective starting materials in the starting material composition is adjusted such that the obtained sulfide-based inorganic solid electrolyte material has a desired composition ratio.

A method for mixing the respective starting materials is not particularly limited as long as it is a mixing method capable of uniformly mixing the respective starting materials. For example, the starting materials can be mixed using a ball mill, a beads mill, a vibrating mill, an impact crushing device, a mixer (for example, a pug mixer, a ribbon mixer, a tumbler mixer, a drum mixer, or a V-type mixer), a kneader, a twin-screw kneader, an air flow grinder, a crusher, a rotary blade crusher, or the like.

Mixing conditions such as a stirring rate, a treatment time, a temperature, a reaction pressure, or a gravitational acceleration applied to the mixture during the mixing of the respective starting materials can be appropriately determined depending on the treatment amount of the mixture.

The lithium sulfide used as a starting material is not particularly limited, and a commercially available lithium sulfide may be used. For example, lithium sulfide obtained by reaction of lithium hydroxide and hydrogen sulfide may also be used. From the viewpoint of obtaining the high-purity sulfide-based inorganic solid electrolyte material and suppressing a side reaction, it is preferable that lithium sulfide having little impurities is used.

Here, in the present embodiment, examples of the lithium sulfide include lithium polysulfide.

Lithium nitride may be used as a starting material. Here, nitrogen in the lithium nitride is discharged into the system as $N_2$. Therefore, by using lithium nitride as an inorganic compound that is a starting material, only the Li composition can be increased with respect to the sulfide-based inorganic solid electrolyte material including Li, P, and S as constituent elements.

The lithium nitride according to the present embodiment is not particularly limited, and a commercially available lithium nitride (for example, $Li_3N$) may be used. For example, lithium nitride obtained by a reaction of metallic lithium (for example, Li foil) and nitrogen gas may also be used. From the viewpoint of obtaining the high-purity solid electrolyte material and suppressing a side reaction, it is preferable that lithium nitride having little impurities is used.

(Step (B) of obtaining sulfide-based inorganic solid electrolyte material in a glass state)

Subsequently, the starting material composition for sulfide-based inorganic solid electrolyte materials is mechanically treated to obtain a sulfide-based inorganic solid electrolyte material in a glass state by vitrifying the diphosphorus pentasulfide composition and the lithium sulfide as the starting materials, while carrying out a chemical reaction.

Here, the mechanical treatment refers to a process of causing two or more kinds of inorganic compounds to mechanically collide with each other to be vitrified in a chemical reaction, for example, a mechanochemical treatment. Here, the mechanochemical treatment refers to a method for vitrifying a target composition while applying mechanical energy such as a shear force or an impact force.

In addition, in step (B), it is preferable that the mechanochemical treatment is a dry mechanochemical treatment from the viewpoint of realizing the treatment in an environment where water or oxygen is removed at a high level.

By using the mechanochemical treatment, the respective starting materials can be mixed while crushing the starting materials into fine particles. Therefore, the contact area of the respective starting materials can be increased. As a result, the reaction of the respective starting materials can be accelerated. The sulfide-based inorganic solid electrolyte material according to the present embodiment can be obtained with higher efficiency.

Here, the mechanochemical treatment is a method for vitrifying a mixing target while applying mechanical energy such as a shear force, an impact force, or a centrifugal force thereto. Examples of a device for vitrification (hereinafter, referred to as "vitrification device") in the mechanochemical treatment include: a crusher and disperser such as a ball mill, a beads mill, a vibrating mill, a turbo mill, a mechano - fusion, a disc mill, or a roll mill; a rotation and impact crushing device including a mechanism as a combination of rotation (shearing stress) and impact (compressive stress) represented by a rock drill, a vibration drill, or an impact driver; a highpressure grinding roll; and a vertical mill such as a roller vertical mill or a ball vertical mill. In particular, from the viewpoint of efficiently generating a very high impact energy, a ball mill or a beads mill is preferable, and a ball mill is more preferable. In addition, from the viewpoint of obtaining excellent continuous productivity, for example, a roll mill; a rotation and impact crushing device including a mechanism as a combination of rotation (shearing stress) and impact (compressive stress) represented by a rock drill, a vibration drill, or an impact driver; a high-pressure grinding roll; or a vertical mill such as a roller vertical mill or a ball vertical mill is preferable.

Mixing conditions such as a rotation speed, a treating time, a temperature, a reaction pressure, or a gravitational acceleration applied to the starting material inorganic composition during the mechanical treatment of the starting material composition for sulfide-based inorganic solid electrolyte materials can be appropriately determined based on the kind of the starting material inorganic composition or the amount thereof treated. In general, as the rotation speed increases, the glass production rate increases, and as the treating time increases, the glass conversion rate increases.

Typically, when X-ray diffraction analysis is performed using CuK$\alpha$ rays as a ray source, in a case where a diffraction peak derived from the starting material is lost or decreases, it can be determined that the starting material composition for sulfide-based inorganic solid electrolyte materials is vitrified and a desired sulfide-based inorganic solid electrolyte material is obtained.

Here, in step (B), it is preferable that the vitrification treatment is performed until the lithium ion conductivity of the sulfide-based inorganic solid electrolyte material according to the present embodiment by an alternating current impedance method under measurement conditions of 27.0°C, an applied voltage of 10 mV, and a measurement frequency range of 0.1 Hz to 7 MHz is preferably equal to or more than $1.0 \times 10^{-4}$ S·cm$^{-1}$, more preferably equal to or more than $2.0 \times 10^{-4}$ S·cm$^{-1}$, and still more preferably equal to or more than $3.0 \times 10^{-4}$ S·cm$^{-1}$. As a result, a sulfide-based inorganic solid electrolyte material having further improved lithium ionic conductivity can be obtained.

(Step (C) of crystallizing at least part of sulfide-based inorganic solid electrolyte material)

Next, the sulfide-based inorganic solid electrolyte material in a glass ceramic state (also referred to as "crystallized glass") is produced by heating the obtained sulfide-based inorganic solid electrolyte material in the glass state such that at least a part of the sulfide-based inorganic solid electrolyte material is crystallized. As a result, a sulfide-based inorganic solid electrolyte material having further improved lithium ionic conductivity can be obtained.

That is, from the viewpoint of obtaining excellent lithium ionic conductivity, it is preferable that the sulfide-based inorganic solid electrolyte material according to the present embodiment is in the glass ceramic state (crystallized glass state).

The temperature at which the sulfide-based inorganic solid electrolyte material in the glass state is heated is preferably in a range of equal to or more than 220°C and equal to or less than 500°C and more preferably in a range of equal to or more than 250°C and equal to or less than 350°C.

The time for which the sulfide-based inorganic solid electrolyte material in the glass state is heated is not particularly limited as long as it is the time for which the desired sulfide-based inorganic solid electrolyte material in the glass ceramic state can be obtained. For example, the time is in a range of equal to or more than 0.5 hours and equal to or less than 24 hours and preferably equal to or more than 1 hour and equal to or less than 3 hours. A heating method is not particularly limited, and examples thereof include a method using a calcination furnace. Conditions such as a temperature or a time during heating can be appropriately adjusted in order to optimize properties of the sulfide-based inorganic solid electrolyte material according to the present embodiment.

In addition, it is preferable that the sulfide-based inorganic solid electrolyte material in the glass state is heated, for example, in an inert gas atmosphere. As a result, deterioration (for example, oxidation) of the sulfide-based inorganic solid electrolyte material can be prevented.

Examples of the inert gas when the sulfide-based inorganic solid electrolyte material in the glass state is heated include argon gas, helium gas, nitrogen gas, and the like. In order to prevent impurities from being mixed in a product, it is preferable that the purity of the inert gas is as high as possible. In addition, in order to avoid contact with water, the dew point is preferably equal to or less than -70°C and more preferably equal to or less than -80°C. A method for introducing the inert gas into the mixed system is not particularly limited as long as it is a method capable of filling the mixed system with the inert gas atmosphere. Examples of the method for introducing the inert gas include a method for purging inert gas and a method for continuously introducing inert gas at a given flow rate.

(Step (D) of crushing, classifying, or granulating)

In the method for producing a sulfide-based inorganic solid electrolyte material according to the present embodiment, optionally, the step of crushing, classifying, or granulating the obtained sulfide-based inorganic solid electrolyte material may be further performed. For example, the sulfide-based inorganic solid electrolyte material having a desired median diameter can be obtained by pulverizing the material to form fine particles and then adjusting the median diameter by a classification operation or a granulation operation. The above-described crushing method is not particularly limited, and a well-known crushing method such as a mixer, an air flow grinder, a mortar, a tumbling mill, or a coffee mill can be used. In addition, the above-described classification method is not particularly limited, and a well-known method such as a sieve can be used.

From the viewpoint of avoiding contact with water in air, it is preferable that crushing or classification is performed in an inert gas atmosphere or a vacuum atmosphere.

In order to obtain the sulfide-based inorganic solid electrolyte material according to the present embodiment, it is important to appropriately adjust the respective steps. The method for producing a sulfide-based inorganic solid electrolyte material according to the present embodiment is not limited to the above-described method. By appropriately adjusting various conditions, the sulfide-based inorganic solid electrolyte material according to the present embodiment can be obtained.

[Solid electrolyte]

Next, a solid electrolyte according to the present embodiment will be described. The solid electrolyte according to the present embodiment includes the sulfide-based inorganic solid electrolyte material according to the present embodiment.

The solid electrolyte according to the present embodiment is not particularly limited, and components other than the sulfide-based inorganic solid electrolyte material according to the present embodiment may include various solid electrolyte materials other than the sulfide-based inorganic solid electrolyte material according to the present embodiment within a range where the object of the present invention does not deteriorate.

The solid electrolyte according to the present embodiment may include various solid electrolyte materials other than the sulfide-based inorganic solid electrolyte material according to the present embodiment. The solid electrolyte material other than the sulfide-based inorganic solid electrolyte material according to the present embodiment is not particularly limited as long as they have ionic conductivity and insulating properties. In general, a solid electrolyte material that is used for a lithium ion battery can be used. Examples of the solid electrolyte materials include: an inorganic solid electrolyte material such as a sulfide-based inorganic solid electrolyte material other than the sulfide-based inorganic solid electrolyte material according to the present embodiment, an oxide-based inorganic solid electrolyte material, or other lithium-based inorganic solid electrolyte materials; and an organic solid electrolyte material such as a polymer electrolyte.

Examples of the sulfide-based inorganic solid electrolyte material other than the sulfide-based inorganic solid electrolyte material according to the present embodiment include a $Li_2S$-$P_2S_5$ material, a $Li_2S$-$SiS_2$ material, a $Li_2S$-$GeS_2$ material, a $Li_2S$-$Al_2S_3$ material, a $Li_2S$-$SiS_2$-$Li_3PO_4$ material, a $Li_2S$-$P_2S_5$-$GeS_2$ material, a $Li_2S$-$Li_2O$-$P_2S_5$-$SiS_2$ material, a $Li_2S$-$GeS_2$-$P_2S_5$-$SiS_2$ material, a $Li_2S$-$SnS_2$-$P_2S_5$-$SiS_2$ material, a $Li_2S$-$P_2S_5$-$Li_3N$ material, a $Li_{2+x}$-$P_4S_3$ material, a $Li_2S$-$P_2S_5$-$P_4S_3$ material, and the like. Among these, one kind may be used singly, or two or more kinds may be used in combination.

Among these, the $Li_2S$-$P_2S_5$ material is preferable from the viewpoint that it has excellent lithium ionic conductivity and has stability to the extent that decomposition or the like does not occur in a wide voltage range. Here, for example, the $Li_2S$-$P_2S_5$ material denotes a solid electrolyte material obtained by a chemical reaction of an inorganic composition including at least $Li_2S$ (lithium sulfide) and $P_2S_5$, which is caused by a mechanical treatment on the inorganic composition.

Here, in the present embodiment, examples of the lithium sulfide include lithium polysulfide.

Examples of the oxide-based inorganic solid electrolyte material include: a NASICON type such as $LiTi_2(PO_4)_3$, $LiZr_2(PO_4)_3$, $LiGe_2(PO_4)_3$, and the like; a perovskite type such as $(La_{0.5+x}Li_{0.5-3x})TiO_3$ and the like; a $Li_2O$-$P_2O_5$ material; a $Li_2O$-$P_2O_5$-$Li_3N$ material; and the like.

Examples of the other lithium-based inorganic solid electrolyte material include LiPON, $LiNbO_3$, $LiTaO_3$, $Li_3PO_4$, $LiPO_{4-x}N_x$ (x satisfies $0 < x \leq 1$), LiN, LiI, LISICON, and the like.

Further, a glass ceramic obtained by precipitating crystal of the inorganic solid electrolytes can also be used as the inorganic solid electrolyte material.

As the organic solid electrolyte material, a polymer electrolyte such as a dry polymer electrolyte, a gel electrolyte and the like can be used.

As the polymer electrolyte, in general, those that are used for a lithium ion battery can be used.

[Solid electrolyte membrane]

Next, a solid electrolyte membrane according to the present embodiment will be described.

The solid electrolyte membrane according to the present embodiment includes a solid electrolyte including the sulfide-based inorganic solid electrolyte material according to the present embodiment as a main component.

The solid electrolyte membrane according to the present embodiment is used, for example, as a solid electrolyte layer forming an all-solid-state lithium ion battery.

Examples of the all-solid-state lithium ion battery to which the solid electrolyte membrane according to the present embodiment is applied include an all-solid-state lithium ion battery in which a positive electrode, a solid electrolyte layer, and a negative electrode are stacked in this order. In this case, the solid electrolyte layer is formed of the solid electrolyte membrane.

The average thickness of the solid electrolyte membrane according to the present embodiment is preferably equal to or more than 5 $\mu$m and equal to or less than 500 $\mu$m, more preferably equal to or more than 10 $\mu$m and equal to or less than 200 $\mu$m, and still more preferably equal to or more than 20 $\mu$m and equal to or less than 100 $\mu$m. When the average thickness of the solid electrolyte membrane is equal to or more than the lower limit value, the loss of the solid electrolyte or the cracking of the solid electrolyte membrane surface can be further suppressed. In addition, when the average thickness of the solid electrolyte membrane is equal to or less than the upper limit, the impedance of the solid electrolyte membrane can be further decreased. As a result, the battery characteristics of the obtained all-solid-state lithium ion battery can be further improved.

It is preferable that the solid electrolyte membrane according to the present embodiment is a compacted body obtained by compression-molding the particle-shaped solid electrolyte including the sulfide-based inorganic solid electrolyte material according to the present embodiment. That is, it is preferable that the particle-shaped solid electrolyte is pressured to obtain a solid electrolyte membrane having a certain strength due to the anchor effect between the solid electrolyte materials.

By obtaining the compacted body, the solid electrolyte particles bind to each other, and the strength of the obtained solid electrolyte membrane can be further improved. As a result, the loss of the solid electrolyte or the cracking of the solid electrolyte membrane surface can be further suppressed.

The content of the sulfide-based inorganic solid electrolyte material according to the present embodiment in the solid electrolyte membrane according to the present embodiment is preferably equal to or more than 50 % by mass, more preferably equal to or more than 60 % by mass, still more preferably equal to or more than 70 % by mass, still more preferably equal to or more than 80 % by mass, still more preferably equal to or more than 90 % by mass with respect to 100 % by mass of the total mass of the solid electrolyte membrane. As a result, the contact between the solid electrolyte particles can be improved, and the interfacial contact resistance of the solid electrolyte membrane can be decreased. As a result, the lithium ionic conductivity of the solid electrolyte membrane can be further improved. By using the solid electrolyte membrane having excellent lithium ionic conductivity, the battery characteristics of the obtained all-solid-state lithium ion battery can be further improved.

The upper limit of the content of the sulfide-based inorganic solid electrolyte material according to the present embodiment in the solid electrolyte membrane according to the present embodiment is not particularly limited and is, for example, equal to or less than 100 % by mass.

The planar shape of the solid electrolyte membrane is not particularly limited and can be appropriately selected according to the shape of an electrode or a current collector. For example, the planar shape is rectangular.

In addition, the solid electrolyte membrane according to the present embodiment may include a binder resin. The content of the binder resin is preferably less than 0.5 % by mass, more preferably equal to or less than 0.1 % by mass, still more preferably equal to or less than 0.05 % by mass, and still more preferably equal to or less than 0.01 % by mass with respect to 100 % by mass of the total mass of the solid electrolyte membrane. In addition, it is more preferable that the solid electrolyte membrane according to the present embodiment does not substantially include the binder resin, and it is most preferable that the solid electrolyte membrane according to the present embodiment does not include the binder resin.

As a result, the contact between the solid electrolyte particles can be improved, and the interfacial contact resistance of the solid electrolyte membrane can be decreased. As a result, the lithium ionic conductivity of the solid electrolyte membrane can be further improved. By using the solid electrolyte membrane having excellent lithium ionic conductivity, the battery characteristics of the obtained all-solid-state lithium ion battery can be improved.

"Substantially not including the binder resin" represents that the binder resin may be included to the extent that the effect of the present embodiment does not deteriorate. In addition, when an adhesive resin layer is provided between the solid electrolyte layer and the positive electrode or the negative electrode, an adhesive resin derived from the adhesive resin layer present in the vicinity of an interface between the solid electrolyte layer and the adhesive resin layer is excluded from "binder resin in the solid electrolyte membrane".

The binder resin refers to a binder that is generally used in order to bind the inorganic solid electrolyte material particles to each other for a lithium ion battery. Examples of the binder resin include polyvinyl alcohol, polyacrylic acid, carboxymethyl cellulose, polytetrafluoroethylene, polyvinylidene fluoride, styrene-butadiene rubber, polyimide, and the like.

The solid electrolyte membrane according to the present embodiment can be obtained, for example, by depositing the particle-shaped solid electrolyte on a cavity surface of a mold or a substrate surface in a film shape and subsequently pressurizing the solid electrolyte deposited in a film shape.

A method for pressurizing the solid electrolyte is not particularly limited. For example, when the particle-shaped solid electrolyte is deposited on a cavity surface of a mold, pressing by a mold and a stamp can be used. When the particle-shaped solid electrolyte is deposited on a base material surface, pressing, roll pressing, flat pressing, and the like by a mold and a stamp can be used.

The pressure at which the solid electrolyte is pressurized is, for example, equal to or more than 10 MPa and equal to or less than 500 MPa.

In addition, the inorganic solid electrolyte deposited in a film shape may be pressurized and heated as necessary. The solid electrolyte particles are fused and bound to each other by performing the heating and pressurizing, and the strength of the obtained solid electrolyte membrane can be further improved. As a result, the loss of the solid electrolyte or the cracking of the solid electrolyte membrane surface can be further suppressed.

The temperature at which the solid electrolyte is heated is, for example, equal to or more than 40°C and equal to or less than 500°C.

[Lithium ion battery]

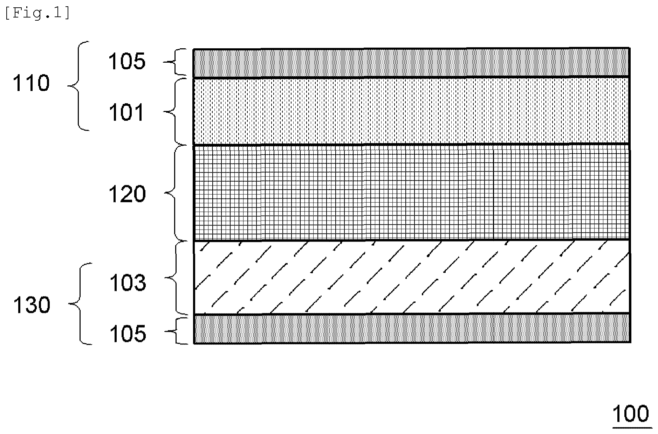

FIG. 1 is a cross-sectional view showing an example of a structure of a lithium ion battery 100 according to an embodiment of the present invention.

The lithium ion battery 100 according to the present embodiment includes, for example, a positive electrode 110 including a positive electrode active material layer 101, an electrolyte layer 120 and a negative electrode 130 including a negative electrode active material layer 103. At least one of the positive electrode active material layer 101, the negative electrode active material layer 103, and the electrolyte layer 120 includes the sulfide-based inorganic solid electrolyte material according to the present embodiment. In addition, it is preferable that all of the positive electrode active material layer 101, the negative electrode active material layer 103, and the electrolyte layer 120 include the sulfide-based inorganic solid electrolyte material according to the present embodiment. In the present embodiment, a layer including a positive electrode active material will be referred to as the positive electrode active material layer 101 unless specified otherwise. The positive electrode 110 may or may not further include a current collector 105 as necessary in addition to the positive electrode active material layer 101. In addition, in the present embodiment, a layer including a negative electrode active material will be referred to as the negative electrode active material layer 103 unless specified otherwise. The negative electrode 130 may or may not further include the current collector 105 as necessary in addition to the negative electrode active material layer 103.

The shape of the lithium ion battery 100 according to the present embodiment is not particularly limited and may be a cylindrical shape, a coin shape, a square shape, a film shape, or any other shape.

The lithium ion battery 100 according to the present embodiment is produced using a generally well-known method. For example, the lithium ion battery 100 is prepared by forming a laminate including the positive electrode 110, the electrolyte layer 120, and the negative electrode 130 in a cylindrical shape, a coin shape, a square shape, a film shape, or any other shape and optionally filling with a non-aqueous electrolytic solution.

(Positive electrode)

The positive electrode 110 is not particularly limited, and a positive electrode that is generally used for a lithium ion battery can be used. The positive electrode 110 is not particularly limited and can be produced using a generally known method. For example, the positive electrode 110 can be obtained by forming the positive electrode active material layer 101 including the positive electrode active material on a surface of the current collector 105 such as aluminum foil.

The thickness or density of the positive electrode active material layer 101 is appropriately determined depending on the intended use of the battery and, thus can be set based on generally known information without any particular limitation.

The positive electrode active material layer 101 includes the positive electrode active material.

The positive electrode active material is not particularly limited, and a generally known material can be used. For example, a composite oxide such as a lithium cobalt oxide ($LiCoO_2$), a lithium nickel oxide ($LiNiO_2$), a lithium manganese oxide ($LiMn_2O_4$), a solid solution oxide ($Li_2MnO_3$-$LiMO_2$ (M=Co, Ni, or the like)), lithium-manganese- nickel oxide (LiNi$_{1/3}$Mn$_{1/3}$Co$_{1/3}$O$_2$), an olivine-type lithium phosphate (LiFePO$_4$), or the like; a conductive polymer such as polyaniline polypyrrole, or the like; a sulfide-based positive electrode active material such as Li$_2$S, CuS, a Li-Cu-S compound, TiS$_2$, FeS, MoS$_2$, a Li-Mo-S compound, a Li-Ti-S compound, a Li-V-S compound, a Li-Fe-S compound, or the like; a material including sulfur as an active material such as acetylene black impregnated with sulfur, porous carbon impregnated with sulfur, mixed powder including sulfur and carbon, or the like can be used. Among these positive electrode active materials, one kind may be used singly, or two or more kinds may be used in combination.

Among these, from the viewpoints of obtaining higher discharge capacity density and obtaining higher cycle characteristics, a sulfide-based positive electrode active material is preferable, and one kind or two or more kinds selected from a Li-Mo-S compound, a Li-Ti-S compound, and a Li-V-S compound are more preferable.

Here, the Li-Mo-S compound includes Li, Mo, and S as constituent elements and can be typically obtained by a chemical reaction caused by mechanical treatment of an inorganic composition as starting materials including molybdenum sulfide and lithium sulfide.

In addition, the Li-Ti-S compound includes Li, Ti, and S as constituent elements and can be typically obtained by a chemical reaction caused by mechanical treatment of an inorganic composition as starting materials including titanium sulfide and lithium sulfide.

The Li-V-S compound includes Li, V, and S as constituent elements and can be typically obtained by a chemical reaction caused by mechanical treatment of an inorganic composition as starting materials including vanadium sulfide and lithium sulfide.

The positive electrode active material layer 101 is not particularly limited and may include, as components other than the positive electrode active material, for example, one or more materials selected from a binder resin, a thickener, a conductive auxiliary agent, a solid electrolyte material, and the like. Hereinafter, the respective materials will be described.

The positive electrode active material layer 101 may include a binder resin having a function of binding the positive electrode active materials to each other and binding the positive electrode active material and the current collector 105 to each other.

The binder resin according to the present embodiment is not particularly limited as long as it is a typical binder resin that can be used for a lithium ion battery. Examples of the binder resin include polyvinyl alcohol, polyacrylic acid, carboxymethyl cellulose, polytetrafluoroethylene, polyvinylidene fluoride, styrene-butadiene rubber, polyimide, and the like. Among the binders, one kind may be used singly, or two or more kinds may be used in combination.

From the viewpoint of securing the fluidity of a slurry suitable for application, the positive electrode active material layer 101 may include a thickener. The thickener is not particularly limited as long as it is a typical thickener that can be used for a lithium ion battery. Examples of the thickener include a cellulose-based polymer such as carboxymethyl cellulose, methyl cellulose, hydroxypropyl cellulose, or the like and an ammonium salt and an alkali metal salt thereof; and a water-soluble polymer such as polycarboxylic acid, polyethylene oxide, polyvinyl pyrrolidone, polyacrylate, polyvinyl alcohol, or the like. Among the thickeners, one kind may be used singly, or two or more kinds may be used in combination.

From the viewpoint of improving the conductivity of the positive electrode 110 the positive electrode active material layer 101 may include a conductive auxiliary agent. The conductive auxiliary agent is not particularly limited as long as it is a typical conductive auxiliary agent that can be used for a lithium ion battery. Examples of the conductive auxiliary agent include a carbon black such as Acetylene black, Ketjen black, or the like and a carbon material such as a vapor-grown carbon fiber.

The positive electrode according to the present embodiment may include a solid electrolyte including the sulfide-based inorganic solid electrolyte material according to the present embodiment or may include a solid electrolyte including a solid electrolyte material other than the sulfide-based inorganic solid electrolyte material according to the present embodiment. The solid electrolyte material other than the sulfide-based inorganic solid electrolyte material according to the present embodiment is not particularly limited as long as they have ionic conductivity and insulating properties. In general, a solid electrolyte material that is used for a lithium ion battery can be used. Examples of the solid electrolyte material include: an inorganic solid electrolyte material such as a sulfide-based inorganic solid electrolyte material, an oxide-based inorganic solid electrolyte material, other lithium-based inorganic solid electrolyte materials, or the like; and an organic solid electrolyte material such as a polymer electrolyte or the like. More specifically, the inorganic solid electrolyte material described above regarding the description of the solid electrolyte according to the present embodiment can be used.

The mixing ratio between various materials in the positive electrode active material layer 101 is appropriately determined depending on the intended use of the battery and, thus can be set based on generally known information without any particular limitation.

(Negative electrode)

The negative electrode 130 is not particularly limited, and a negative electrode that is generally used for a lithium ion battery can be used. The negative electrode 130 is not particularly limited and can be produced using a generally known method. For example, the negative electrode 130 can be obtained by forming the negative electrode active material layer 103 including the negative electrode active material on a surface of the current collector 105 such as copper.

The thickness or density of the negative electrode active material layer 103 is appropriately determined depending on the intended use of the battery and, thus can be set based on generally known information without any particular limitation.

The negative electrode active material layer 103 includes the negative electrode active material.

The negative electrode active material is not particularly limited as long as the material is a typical negative electrode active material that can be used for a negative electrode of a lithium ion battery. Examples of the negative electrode active material include a carbon material such as natural graphite, artificial graphite, resinous coal, carbon fiber, activated charcoal, hard carbon, soft carbon, or the like; a metal-based material mainly formed of lithium, a lithium alloy, tin, a tin alloy, silicon, a silicon alloy, gallium, a gallium alloy, indium, an indium alloy, aluminum, an aluminum alloy, or the like; a conductive polymer such as polyacene, polyacetylene, polypyrrole, or the like; and a lithium titanium composite oxide (for example, $Li_4Ti_5O_{12}$). Among these negative electrode active materials, one kind may be used singly, or two or more kinds may be used in combination.

The negative electrode active material layer 103 is not particularly limited and may include, as components other than the negative electrode active material, for example, one or more materials selected from a binder resin, a thickener, a conductive auxiliary agent, a solid electrolyte material, and the like. These materials are not particularly limited, and examples thereof are the same as those of the materials used for the positive electrode 110.

The mixing ratio between various materials in the negative electrode active material layer 103 is appropriately determined depending on the intended use of the battery and, thus can be set based on generally known information without any particular limitation.

The negative electrode according to the present embodiment may include a solid electrolyte including the sulfide-based inorganic solid electrolyte material according to the present embodiment or may include a solid electrolyte including a solid electrolyte material other than the sulfide-based inorganic solid electrolyte material according to the present embodiment. The solid electrolyte material other than the sulfide-based inorganic solid electrolyte material according to the present embodiment is not particularly limited as long as they have ionic conductivity and insulating properties. In general, a solid electrolyte material that is used for a lithium ion battery can be used. Examples of the solid electrolyte material include: an inorganic solid electrolyte material such as a sulfide-based inorganic solid electrolyte material, an oxide-based inorganic solid electrolyte material, other lithium-based inorganic solid electrolyte materials, or the like; and an organic solid electrolyte material such as a polymer electrolyte or the like. More specifically, the inorganic solid electrolyte material described above regarding the description of the solid electrolyte according to the present embodiment can be used.

(Electrolyte layer)

Next, the electrolyte layer 120 will be described. The electrolyte layer 120 is a layer formed between the positive electrode active material layer 101 and the negative electrode active material layer 103.

Examples of the electrolyte layer 120 include a separator impregnated with a non-aqueous electrolytic solution and a solid electrolyte layer including a solid electrolyte.

The separator according to the present embodiment is not particularly limited as long as it has a function of electrically insulating the positive electrode 110 and the negative electrode 130 to allow transmission of lithium ions. For example, a porous film can be used.

As the porous film, a microporous polymer film is suitably used, and examples of a material thereof include polyolefin, polyimide, polyvinylidene fluoride, polyester, and the like. In particular, a porous polyolefin film is preferable, and specific examples thereof include a porous polyethylene film, a porous polypropylene film, and the like.

The non-aqueous electrolytic solution is obtained by dissolving an electrolyte in a solvent.

As the electrolyte, any known lithium salt can be used, and the electrolyte may be selected depending on the kind of the active material. Examples of the electrolyte include $LiClO_4$ $LiBF_6$, $LiPF_6$, $LiCF_3SO_3$, $LiCF_3CO_2$, $LiAsF_6$, $LiSbF_6$, $LiB_{10}Cl_{10}$, $LiAlCl_4$, LiCl, LiBr, $LiB(C_2H_5)_4$, $CF_3SO_3Li$, $CH_3SO_3Li$, $LiCF_3SO_3$, $LiC_4F_9SO_3$, $Li(CF_3SO_2)_2N$, a lithium lower aliphatic carboxylate, and the like.

The solvent in which the electrolyte is dissolved is not particularly limited as long as it is typically used as a liquid in which the electrolyte is dissolved. Examples of the solvent include: a carbonate such as ethylene carbonate (EC), propylene carbonate (PC), butylene carbonate (BC), dimethyl carbonate (DMC), diethyl carbonate (DEC), methyl ethyl carbonate (MEC), vinylene carbonate (VC), or the like; a lactone such as γ-butyrolactone, γ-valerolactone, or the like; an ether such as trimethoxy methane, 1,2-dimethoxyethane, diethyl ether, 2-ethoxy ethane, tetrahydrofuran, 2-methyl tetrahydrofuran, or the like; a sulfoxide such as dimethyl sulfoxide or the like; an oxolane such as 1,3-dioxolane, 4-methyl-1,3-dioxolane, or the like; a nitrogen-including solvent such as acetonitrile, nitromethane, formamide, dimethylformamide, or the like; an organic acid ester such as methyl formate, methyl acetate, ethyl acetate, butyl acetate, methyl propionate, ethyl propionate, or the like; a phosphate triester or a diglyme; a triglyme; a sulfolane such as sulfolane, methyl sulfolane, or the like; an oxazolidinone such as 3-methyl-2-oxazolidinone or the like; a sultone such as 1,3-propanesultone, 1,4-butanesultone, naphthasultone, or the like; and the like. Among these, one kind may be used singly, or two or more kinds may be used in combination.

The solid electrolyte layer according to the present embodiment is a layer formed between the positive electrode active material layer 101 and the negative electrode active material layer 103, and is formed of a solid electrolyte including a solid electrolyte material. The solid electrolyte in the solid electrolyte layer is not particularly limited as long as it has lithium ionic conductivity. In the present embodiment, it is preferable that the solid electrolyte includes the sulfide-based inorganic solid electrolyte material according to the present embodiment.

The content of the solid electrolyte in the solid electrolyte layer according to the present embodiment is not particularly limited as long as it has a proportion where desired insulating properties can be obtained. For example, the content of the solid electrolyte is in a range of equal to or more than 10 vol% and equal to or less than 100 vol% and preferably in a range of equal to or more than 50 vol% and equal to or less than 100 vol%. In particular, in the present embodiment, it is preferable that the solid electrolyte layer is formed of only the solid electrolyte including the sulfide-based inorganic solid electrolyte material according to the present embodiment.

In addition, the solid electrolyte layer according to the present embodiment may include a binder resin. By including the binder resin, a flexible solid electrolyte layer can be obtained. Examples of the binder resin include a fluorine-containing binder such as polytetrafluoroethylene or polyvinylidene fluoride. The thickness of the solid electrolyte layer is, for example, in a range of equal to or more than 0.1 $\mu$m and equal to or less than 1000 $\mu$m and preferably in a range of equal to or more than 0.1 $\mu$m and equal to or less than 300 $\mu$m.

Although the embodiments of the present invention have been described above, these are examples of the present invention, and various configurations other than the above can be adopted.

Furthermore, the present invention is not limited to the above-described embodiments, and modifications, improvements, and the like within a range where the object of the present invention can be achieved are included in the present invention. Examples

Hereinafter, the present invention will be described in more detail using Examples and Comparative Examples. However, the present invention is not limited to these Examples and Comparative Examples.

[1] Production of $P_2S_5$

<Example 1>

As a starting material diphosphorus pentasulfide composition, diphosphorus pentasulfide (product name: Normal/S, melting point: 289.9°C, degree of crystallinity: 31%) manufactured by Perimeter Solutions was used.

Next, the starting material diphosphorus pentasulfide composition was placed in a quartz container and set in a vacuum heating device (manufactured by FURUKAWA Inc.). Next, the vacuum gas replacement was repeated three times, and then the heating was carried out at 200°C for 7 hours under aeration of Ar gas of 10 ml/min. Next, the components accumulated at the bottom of the quartz container were collected and ground with an agate mortar for 5 minutes to obtain a powder-shaped highly crystallized diphosphorus pentasulfide composition 1. Each evaluation was performed on the obtained highly crystallized diphosphorus pentasulfide composition 1. The obtained results are shown in Table 1.

<Example 2>

As a starting material diphosphorus pentasulfide composition, diphosphorus pentasulfide (product name: SUPERIOR GRADE Powder, melting point: 287.6°C, degree of crystallinity: 16.6%) manufactured by LIAONING RUIXING CHEMICAL GROUP was used.

Next, the starting material diphosphorus pentasulfide composition was placed in a quartz container and set in a vacuum heating device (manufactured by FURUKAWA Inc.). Next, the vacuum gas replacement was repeated three times, and then the heating was carried out at 200°C for 7 hours under aeration of Ar gas of 10 ml/min. Next, the components accumulated at the bottom of the quartz container were collected and ground with an agate mortar for 5 minutes to obtain a powder-shaped highly crystallized diphosphorus pentasulfide composition 2. Each evaluation was performed on the obtained highly crystallized diphosphorus pentasulfide composition 2. The obtained results are shown in Table 1.

<Comparative Example 1>

As a starting material diphosphorus pentasulfide composition, diphosphorus pentasulfide (product name:

SUPERIOR GRADE Powder, melting point: 287.6°C, degree of crystallinity: 16.6%) manufactured by LIAONING RUIXING CHEMICAL GROUP was used.

Next, the starting material diphosphorus pentasulfide composition was placed in a quartz container and set in a vacuum heating device (manufactured by FURUKAWA Inc.). Next, heating was performed in a vacuum under reduced pressure of -0.094 MPa at 300°C for 2 hours. Next, the components accumulated at the bottom of the quartz container were collected and ground with an agate mortar for 5 minutes to obtain a powder-shaped diphosphorus pentasulfide composition 3. Each evaluation was performed on the obtained diphosphorus pentasulfide composition 3. The obtained results are shown in Table 1.

<Comparative Example 2>

As a diphosphorus pentasulfide composition 4, powder-shaped phosphorus pentasulfide (product name: SUPERIOR GRADE Powder, melting point: 287.6°C, degree of crystallinity: 16.6%) manufactured by LIAONING RUIXING CHEMICAL GROUP Inc. was used as it was. Each evaluation was performed on the diphosphorus pentasulfide composition 4. The obtained results are shown in Table 1.

Here, the starting material diphosphorus pentasulfide compositions used in Examples and Comparative Examples, which are manufactured by LIAONING RUIXING CHEMICAL GROUP Inc. are sold as high-purity grades , respectively.

[2] Producing of sulfide-based inorganic solid electrolyte material

The sulfide-based inorganic solid electrolyte material was prepared according to the following procedure.

$Li_2S$ powder (manufactured by FURUKAWA Inc., purity: 99.9%), $Li_3N$ powder (manufactured by FURUKAWA Inc.), and $P_2S_5$ powder were used as starting materials, and the highly crystallized diphosphorus pentasulfide composition obtained in Examples and the diphosphorus pentasulfide composition obtained in Comparative Examples were used as the $P_2S_5$ powder, respectively.

First, a rotary blade crusher and an alumina pot (inner volume: 400 mL) were disposed in the glove box. Next, injection and evacuation of high-purity dry argon gas ($H_2O$ < 1 ppm, $O_2$ < 1 ppm) obtained by a gas purification device were performed three times in the glove box.

Next, in a glove box, a starting material composition for sulfide-based inorganic solid electrolyte materials (hereinafter, referred to as a "starting material composition") was prepared by mixing a total of 5 g of $Li_2S$ powder, $P_2S_5$ powder and $Li_3N$ powder ($Li_2S:P_2S_5:Li_3N$ = 71.1:23.7:5.3 (mol%)) using the rotary blade type crusher (rotation speed: 18,000 rpm) (10 times of operations of mixing for 10 seconds and standing for 10 seconds (total mixing time: 100 seconds)).

Next, the starting material composition and 500 g of $ZrO_2$ balls having a diameter of 10 mm were put into the alumina pot (inner volume: 400 mL) in the glove box, and the pot was sealed.

Next, the alumina pot was taken out from the glove box, the alumina pot was attached to a ball mill placed in an atmosphere of dry air introduced through a membrane air dryer, and a mechanochemical treatment was performed at 120 rpm for 500 hours such that the starting material composition was vitrified. Whenever the powders were mixed for 48 hours, the powder was scraped off from the inner wall of the pot in the glove box. After sealing the pot, milling was continued in a dry air atmosphere.

Next, the alumina pot was put into the glove box, and the obtained powder was transported from the alumina pot to a carbon crucible and was annealed in a heating furnace disposed in the glove box at 290°C for 2 hours.

Each evaluation was performed on the obtained sulfide-based inorganic solid electrolyte material. The obtained results are shown in Table 1.

[3] Measuring method

In the following examples and comparative examples, a measuring method performed on the diphosphorus pentasulfide composition and the sulfide-based inorganic solid electrolyte material will be described.

(Degree of crystallinity)

First, using an X-ray diffractometer (RINT2000, manufactured by Rigaku Inc.), X-ray diffraction spectrum of the highly crystallized diphosphorus pentasulfide composition obtained in Example and the diphosphorus pentasulfide composition obtained in Comparative Example were obtained by an X-ray diffraction analysis method under the conditions of a voltage of 40 kV, a current of 40 mA, a divergence slit of 1°, a divergence slit vertical limit of 10 mm, a scattering slit of 1°, a light-receiving slit of 0.3 mm, a measurement start angle of 3°, and a measurement end angle of 90°. In addition, CuKα rays were used as a ray source. In addition, the sample holder was a glass sample plate (Cat No. 9200, sample portion: 20 mm $\times$ 20 mm, depth: 0.5 mm).

Next, the degree of crystallinity Xc of the highly crystallized diphosphorus pentasulfide composition obtained in Example and the diphosphorus pentasulfide composition obtained in Comparative Example was calculated from the obtained X-ray diffraction spectrum using the following peak separation method.

First, the X-ray diffraction pattern was separated into a crystalline diffraction curve and an amorphous halo using a profile fitting method without considering the influence of non-interference scattering, lattice disorder, and the like. For profile fitting, analysis software attached to the X-ray diffractometer (manufactured by Rigaku Inc., product name: integrated powder X-ray analysis software PDXL application analysis (degree of crystallinity)) was used.

A specific procedure for calculating the degree of crystallinity is as follows (see FIG. 3; X-ray diffraction handbook, Rigaku Inc., February 21, 2000, third edition, P.83, FIG. 3.6.2).

(1) Separation of background

The X-ray intensities from the low angle side to the high angle side were connected by a straight line, and the area below the straight line was used as the background.

(2) Separation of halo

The halo pattern due to the amorphous was estimated, and the halo was separated from the scattering curve from which the background was subtracted.

(3) Separation of crystalline diffraction curve

A crystalline diffraction curve was separated by the same method as in (2) described above.

(4) Calculation of degree of crystallinity

The degree of crystallinity Xc was calculated from the following Equation (2) using the area (integrated intensity) under the curve of the diffraction curve of the amorphous component (amorphous halo) and the diffraction curve of the crystalline component (crystalline diffraction curve), which were separated from the scattering curve.

$$Xc = \{Ic/(Ic+Ia)\} \times 100 \quad (2)$$

Ic: area (integrated intensity) under curve of diffraction curve (crystalline diffraction curve) of crystalline component
Ia: area (integrated intensity) under curve of diffraction curve (amorphous halo) of amorphous component

(Heat of fusion and melting point)

The heat of fusion of the highly crystallized diphosphorus pentasulfide composition obtained in Examples and the diphosphorus pentasulfide composition obtained in Comparative Examples were measured using a differential scanning calorimeter.

In an argon atmosphere, 20 to 25 mg of the diphosphorus pentasulfide composition was weighed in an aluminum pan, and then an aluminum lid was covered and sealed with a sample sealer. The aluminum container of the reference is in an empty state. Differential scanning calorimetry was performed using a differential scanning calorimeter under conditions of a start temperature of 25°C, a measurement temperature range of 30°C to 350°C, a temperature rising rate of 5°C/min, and an atmosphere of 100 ml/min of argon. As a differential scanning calorimeter at this time, DSC6300 (manufactured by Seiko Instruments Inc.) was used. In this case, in all of Examples and Comparative Examples, an endothermic peak was observed in a temperature range of equal to or more than 280°C and equal to or less than 300°C in the obtained DSC curve.

The heat of fusion was calculated by obtaining an area surrounded by a melting endothermic curve including an endothermic peak in a temperature range of equal to or more than 280°C and equal to or less than 300°C and a baseline in the DSC curve obtained as described above.

In addition, the peak top of the endothermic peak in a temperature range of equal to or more than 280°C and equal to or less than 300°C was measured as the melting point.

(Content of diphosphorus pentasulfide)

The content of the diphosphorus pentasulfide in the highly crystallized diphosphorus pentasulfide composition obtained in Examples and the diphosphorus pentasulfide composition obtained in Comparative Examples was measured using a solid $^{31}P$-NMR spectrum.

First, in a glove box purged with $N_2$ gas, a measurement sample tube having a diameter of 3.2 mm is filled with a test sample and is spun ((MAS (magic angle spinning)) in a state where it is inclined at a magic angle (54.7 degrees) with respect to an external magnetic field to perform the measurement under the following conditions.

Device: JNM-ECA-600 manufactured by JEOL RESONANCE Inc.
Observation frequency: 242.95 MHz
Pulse width: 90° pulse
Pulse waiting time: 2800 seconds
Number of integrations: 64 times
Measurement mode: a single pulse method
MAS rate: 12 kHz
Reference material: $(NH_4)_2HPO_4 \cdot 1.33$ ppm

For the peak detected in the $^{31}P$-NMR spectrum of the test sample, waveform separation using a Gaussian function was carried out based on the following peak attribution with reference 1 "Hellmut Eckert, Cheryl S. Liang and Galen D. Stucky: $^{31}P$ magic angle spinning NMR of crystalline phosphorus sulfides. Correlation of $^{31}P$ chemical shielding tensors with local environments, J. Phys. Chem, 1989, 93, 452-457", and the integral value of each peak was calculated.

In this case, the chemical shift of $P_2S_5$ was 40 to 52 ppm, the chemical shift of $P_4S_9$ was 52 to 70 ppm, the chemical shift of $P_4S_7$ was 80 to 90 ppm, 90 to 100 ppm, and 110 to 115 ppm, and the chemical shift of $P_4S_3$ was 80 to 90 ppm and 90 to 100 ppm.

The proportion of the integrated value of the peaks present at 40 to 52 ppm to the total of the integrated values of the respective peaks was calculated, and the proportion was defined as the content of the diphosphorus pentasulfide.

(Median diameter $d_{50}$)

The particle size distribution of the highly crystallized diphosphorus pentasulfide composition obtained in Example and the diphosphorus pentasulfide composition obtained in Comparative Example was measured by a laser diffraction scattering method using a laser diffraction scattering-type particle size distribution analyzer (manufactured by Malvern Panalytical Ltd., MASTER SIZER 3000). From the measurement result, for the diphosphorus pentasulfide composition, a median diameter $d_{50}$ in a case where a cumulative frequency is 50% in a volume-based cumulative frequency distribution curve was obtained.

(Lithium ion conductivity)

A sulfide-based inorganic solid electrolyte material was prepared by the above-described procedure using the highly crystallized diphosphorus pentasulfide composition obtained in Examples and the diphosphorus pentasulfide compositions obtained in Comparative Examples, and the lithium ion conductivity of the obtained powder was measured by an alternating current impedance method.

For the measurement of the lithium ionic conductivity, a potentiostat/galvanostat SP-300 (manufactured by Bio-Logic Sciences Instruments Inc.) was used. The size of the sample was diameter of 9.5 mm and thickness of 1.2 to 2.0 mm. Measurement conditions were applied voltage of 10 mV, measurement temperature of 27.0°C, and measurement frequency range of 0.1 Hz to 7 MHz, and electrode of Li foil.

Here, as a sample for measuring lithium ion conductivity, a plate-shaped sulfide-based inorganic solid electrolyte material having a diameter of 9.5 mm and a thickness of 1.2 to 2.0 mm was used which was obtained by pressing at 270 MPa for 10 minutes using a pressing device on 150 mg of the powder obtained by producing a sulfide-based inorganic solid electrolyte material by the above-described procedure using the highly crystallized diphosphorus pentasulfide composition obtained in Examples and the diphosphorus pentasulfide composition obtained in Comparative Examples.

(Measurement of maximum value of oxidative decomposition current)

A sulfide-based inorganic solid electrolyte material was prepared by the above-described procedure using the diphosphorus pentasulfide compositions with a high degree of crystallinity obtained in Examples and the diphosphorus pentasulfide compositions obtained in Comparative Examples, and 120 to 150 mg of the obtained powder was pressed at 270 MPa for 10 minutes using a press device to obtain a plate-shaped sulfide-based inorganic solid electrolyte material (pellet) having a diameter of 9.5 mm and a thickness of 1.3 mm. Next, Li foil as a reference electrode and counter electrode was pressed against on one surface of the obtained pellet under conditions of 18 MPa and 10 minutes, and SUS314 foil as a working electrode adhered closely to another surface of the pellet.

Next, using a potentiostat/galvanostat SP-300 manufactured by Bio-Logic Sciences Instruments Inc., the maximum value of the oxidative decomposition current of the sulfide-based inorganic solid electrolyte material was determined under the conditions of a temperature of 25°C, a sweep voltage range of 0 to 5 V, and a voltage sweep rate of 5 mV/sec.

(Recovery rate)

Using the masses of the highly crystallized diphosphorus pentasulfide composition obtained in Examples and the iphosphorus pentasulfide composition obtained in Comparative Examples and the mass of the starting material diphosphorus pentasulfide composition, the recovery rate was calculated from the following Equation (1).

$$\text{Recovery rate (\%)} = (M_A/M_B) \times 100 \quad (1)$$

$M_A$: mass (g) of highly crystallized diphosphorus pentasulfide composition
$M_B$: mass (g) of starting material diphosphorus pentasulfide composition

[Table 1]

| | | Example 1 | Example 2 | Comparative Example 1 | Comparative Example 2 |
|---|---|---|---|---|---|
| Condition of treatment | Temperature (°C) | 200 | 200 | 300 | Not processed |
| | Time (h) | 7 | 7 | 2 | |
| | Sintering atmosphere | Ar | Ar | Vaccum | |
| Degree of crystallinity (%) | | 63.0 | 46.5 | 61.1 | 16.6 |
| Heat of fusion (J/g) | | 79 | 60 | 107 | 62 |
| Content of diphosphorus pentasulfide (% by mass) | | 80 | 70 | 80 | 30 |
| Melting point (°C) | | 290.3 | 289.7 | 292.1 | 289.5 |
| Median diameter $d_{50}$ ($\mu$m) | | 41 | 49 | 161 | 382 |
| Maximum value of oxidative decomposition current ($\mu$A) | | 0.01 | 0.02 | 0.02 | 0.01 |
| Lithium ion conductivity (S·cm$^{-1}$) | | $1.6 \times 10^{-3}$ | $1.0 \times 10^{-3}$ | $1.4 \times 10^{-3}$ | $0.2 \times 10^{-4}$ |
| Recovery rate (%) | | 98 | 98 | 77 | - |

The diphosphorus pentasulfide compositions of Examples have both high recovery rate and high lithium ion conductivity, and are useful for producing a sulfide-based inorganic solid electrolyte material.

In addition, in the method for producing a diphosphorus pentasulfide composition of Examples, both a high degree of crystallinity and a high recovery rate were achieved.

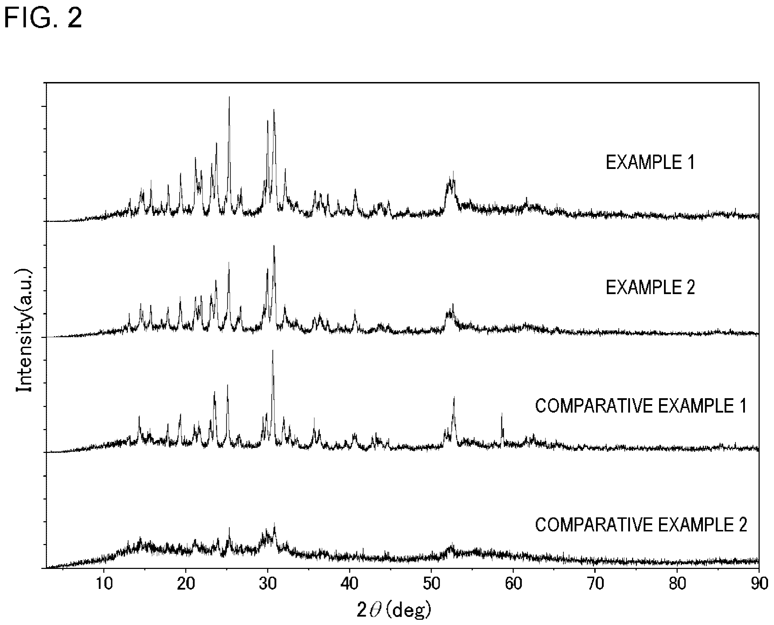

Here, FIG. 2 shows X-ray diffraction spectrum of the diphosphorus pentasulfide compositions obtained by the methods for producing a diphosphorus pentasulfide composition of Examples and Comparative Examples.

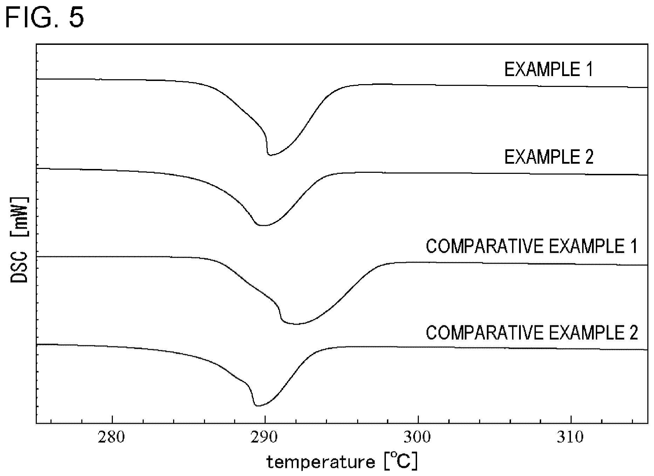

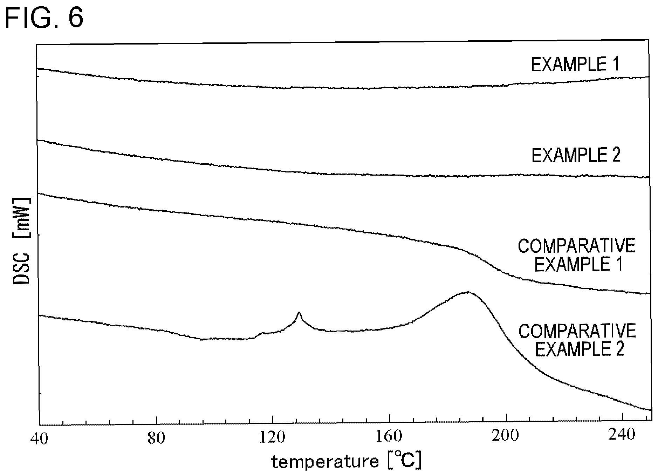

In addition, FIG. 5 shows a DSC curve on the high temperature side, and FIG. 6 shows a DSC curve on the low temperature side.

REFERENCE SIGNS LIST

100     lithium ion battery
101     positive electrode active material layer
103     negative electrode active material layer
105     current collector
110     positive electrode
120     electrolyte layer
130     negative electrode

**Claims**

1. A diphosphorus pentasulfide composition,

   wherein a degree of crystallinity calculated from a spectrum obtained by X-ray diffraction using a CuK$\alpha$ ray as a ray source is equal to or more than 40% and equal to or less than 80%,
   in a DSC curve of the diphosphorus pentasulfide composition obtained by measurement using a differential scanning calorimeter under conditions of a start temperature of 25°C, a measurement temperature range of equal to or more than 30°C and equal to or less than 350°C, a temperature rising rate of 5°C/min, and an argon atmosphere of 100 ml/min, an endothermic peak is observed in a temperature range of equal to or more than 280°C and equal to or less than 300°C, and
   a heat of fusion of the endothermic peak is equal to or more than 60 J/g and equal to or less than 100 J/g.

2. The diphosphorus pentasulfide composition according to Claim 1,
   wherein a content of diphosphorus pentasulfide in the diphosphorus pentasulfide composition is equal to or more than 70% by mass.

3. The diphosphorus pentasulfide composition according to Claim 1 or 2,
   wherein the diphosphorus pentasulfide composition has a powder shape.

4. The diphosphorus pentasulfide composition according to any one of Claims 1 to 3,
   wherein a median diameter $d_{50}$ in a case where a cumulative frequency is 50% in a volume-based cumulative frequency distribution curve measured using a laser diffraction scattering-type particle size distribution analyzer is equal to or more than 1 $\mu$m and equal to or less than 150 $\mu$m.

5. A starting material composition for sulfide-based inorganic solid electrolyte materials, the starting material composition comprising:

   the diphosphorus pentasulfide composition according to any one of Claims 1 to 4; and
   lithium sulfide.

6. A sulfide-based inorganic solid electrolyte material comprising:
   a mechanically processed product of the diphosphorus pentasulfide composition according to any one of Claims 1 to 4 and lithium sulfide.

7. The sulfide-based inorganic solid electrolyte material according to Claim 6,
   wherein a lithium ion conductivity measured by an alternating current impedance method under measurement conditions of 27.0°C, an applied voltage of 10 mV, and a measurement frequency range of 0.1 Hz to 7 MHz is equal to or more than $1.0 \times 10^{-3}$ S·cm$^{-1}$.

8. The sulfide-based inorganic solid electrolyte material according to Claim 6 or 7,
   wherein a maximum value of an oxidative decomposition current of the sulfide-based inorganic solid electrolyte material, which is measured under conditions of a temperature of 25°C, a sweep voltage range of 0 to 5 V, and a voltage sweep rate of 5 mV/sec, is equal to or less than 0.50 $\mu$A.

9. A method for producing a sulfide-based inorganic solid electrolyte material, the method comprising:
   a step of mechanically processing the starting material composition for sulfide-based inorganic solid electrolyte materials according to Claim 5.

10. A solid electrolyte comprising:

the sulfide-based inorganic solid electrolyte material according to any one of Claims 6 to 8.

11. A solid electrolyte membrane comprising:
    the solid electrolyte according to Claim 10 as a main component.

12. An all-solid-state lithium ion battery comprising:

    a positive electrode including a positive electrode active material layer;
    an electrolyte layer; and
    a negative electrode including a negative electrode active material layer,
    wherein at least one of the positive electrode active material layer, the electrolyte layer, or the negative electrode active material layer contains the sulfide-based inorganic solid electrolyte material according to any one of Claims 6 to 8.

13. A method for producing a diphosphorus pentasulfide composition, the method comprising:

    a heating step of subjecting a starting material diphosphorus pentasulfide composition to a heat treatment at a temperature which is equal to or more than 130°C and less than a melting point of the starting material diphosphorus pentasulfide composition,
    wherein a highly crystallized diphosphorus pentasulfide composition having a higher degree of crystallinity than the starting material diphosphorus pentasulfide composition is obtained.

14. A method for producing a diphosphorus pentasulfide composition according to Claim 13,
    wherein a degree of crystallinity of the highly crystallized diphosphorus pentasulfide composition, which is calculated from a spectrum obtained by X-ray diffraction using a CuKα ray as a ray source, is equal to or more than 40% and equal to or less than 80%.

15. A method for producing a diphosphorus pentasulfide composition according to Claim 13 or 14,
    wherein a recovery rate of the highly crystallized diphosphorus pentasulfide composition is equal to or more than 90% and equal to or less than 99%.

16. A method for producing a diphosphorus pentasulfide composition according to any one of Claims 13 to 15,
    wherein a heating time in the heating step is equal to or more than 0.5 hours and equal to or less than 24 hours.

17. A method for producing a diphosphorus pentasulfide composition according to any one of Claims 13 to 16,
    wherein a heating temperature in the heating step is equal to or more than 180°C and equal to or less than 220°C and a heating time in the heating step is equal to or more than 6 hours and equal to or less than 8 hours.

18. A method for producing a diphosphorus pentasulfide composition according to any one of Claims 13 to 17, the method comprising:
    performing the heating step in an inert gas atmosphere or a vacuum atmosphere.

19. A method for producing a diphosphorus pentasulfide composition according to Claim 18, the method comprising:

    performing the heating step in an inert gas atmosphere,
    wherein an inert gas in the inert gas atmosphere is an argon gas.

[Fig.1]

100

FIG. 2

FIG. 3

FIG. 4

FIG. 5

FIG. 6

## INTERNATIONAL SEARCH REPORT

| International application No. |
| --- |
| **PCT/JP2023/003980** |

| A. | CLASSIFICATION OF SUBJECT MATTER |
| --- | --- |

***H01B 1/06***(2006.01)i; ***C01B 25/14***(2006.01)i; ***H01B 13/00***(2006.01)i; ***H01M 10/052***(2010.01)i; ***H01M 10/0562***(2010.01)i
FI:    H01B1/06 A; H01B13/00 Z; H01M10/0562; H01M10/052; C01B25/14

According to International Patent Classification (IPC) or to both national classification and IPC

| B. | FIELDS SEARCHED |
| --- | --- |

Minimum documentation searched (classification system followed by classification symbols)

　　　H01B1/06; C01B25/14; H01B13/00; H01M10/052; H01M10/0562

Documentation searched other than minimum documentation to the extent that such documents are included in the fields searched

　　　Published examined utility model applications of Japan 1922-1996
　　　Published unexamined utility model applications of Japan 1971-2023
　　　Registered utility model specifications of Japan 1996-2023
　　　Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2020-164367 A (FURUKAWA CO., LTD.) 08 October 2020 (2020-10-08) paragraphs [0067], [0092], [0095], [0101], [0102], [0110] | 1-12 |
| X | JP 2018-97954 A (TOYOTA JIDOSHA KABUSHIKI KAISHA) 21 June 2018 (2018-06-21) paragraphs [0041]-[0045], [0065] | 13-19 |

☐ Further documents are listed in the continuation of Box C.　　☑ See patent family annex.

| | |
| --- | --- |
| *　　Special categories of cited documents: | "T"　later document published after the international filing date or priority date and not in conflict with the application but cited to understand the principle or theory underlying the invention |
| "A"　document defining the general state of the art which is not considered to be of particular relevance | |
| "E"　earlier application or patent but published on or after the international filing date | "X"　document of particular relevance; the claimed invention cannot be considered novel or cannot be considered to involve an inventive step when the document is taken alone |
| "L"　document which may throw doubts on priority claim(s) or which is cited to establish the publication date of another citation or other special reason (as specified) | "Y"　document of particular relevance; the claimed invention cannot be considered to involve an inventive step when the document is combined with one or more other such documents, such combination being obvious to a person skilled in the art |
| "O"　document referring to an oral disclosure, use, exhibition or other means | |
| "P"　document published prior to the international filing date but later than the priority date claimed | "&"　document member of the same patent family |

| Date of the actual completion of the international search | Date of mailing of the international search report |
| --- | --- |
| **10 April 2023** | **25 April 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/003980**

| Patent document cited in search report | | | Publication date (day/month/year) | Patent family member(s) | | | Publication date (day/month/year) |
|---|---|---|---|---|---|---|---|
| JP | 2020-164367 | A | 08 October 2020 | US | 2022/0085407 | A1 | |
| | | | | paragraphs [0203], [0251]-[0254], [0266], [0280]-[0283], table 1 | | | |
| JP | 2018-97954 | A | 21 June 2018 | US | 2018/0166740 | A1 | |
| | | | | paragraphs [0062]-[0067], [0098]-[0102] | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020061304 A

**Non-patent literature cited in the description**

- X-ray diffraction handbook. Rigaku Corporation, 21 February 2000, 83
- **J. PHYS**. *Chem*, 1989, vol. 93, 452-457
- X-ray diffraction handbook. Rigaku Inc., 21 February 2000, 83